# EUROPEAN PATENT APPLICATION

(11) **EP 4 823 137 A1**
(43) Date of publication of application: **14.10.2026**
(21) Application number: 24910356.5
(22) Date of filing: 11.11.2024
(51) Int. Cl.: H04W 8/20

(54) **COMMUNICATION METHOD AND DEVICE**

(30) Priority: 27.12.2023 CN 202311828079
(71) Applicant: Huawei Technologies Co., Ltd., Shenzhen, Guangdong 518129 (CN)
(72) Inventor: XI, Yan, Shenzhen, Guangdong 518129 (CN); YAN, Xueqiang, Shenzhen, Guangdong 518129 (CN); ZHAO, Mingyu, Shenzhen, Guangdong 518129 (CN); WANG, Junfan, Shenzhen, Guangdong 518129 (CN); WU, Shaoyun, Shenzhen, Guangdong 518129 (CN); XING, Weijun, Shenzhen, Guangdong 518129 (CN); JIN, Weisheng, Shenzhen, Guangdong 518129 (CN)
(74) Representative: Goddar, Heinz J.
(86) International application number: PCT/CN2024/131423
(87) International publication number: WO 2025/139420

(57) **Abstract**

A communication method and apparatus are provided, to improve data transmission efficiency. A data communication proxy in a 3GPP network may support a plurality of transmission protocols. The data communication proxy receives a first subscription message from a first network element in the 3GPP network, where the first subscription message is used to subscribe to data of a first information type; receives first data from a second network element in the 3GPP network, where the first data is data of the first information type, and the first data is encapsulated by using a first transmission protocol in the plurality of transmission protocols; and sends the first data to the first network element. Data transmission is directly performed through the data communication proxy, to improve data transmission efficiency. In addition, the data communication proxy supports a plurality of transmission protocols, to meet different service scenarios.

## Description

### CROSS-REFERENCE TO RELATED APPLICATIONS

This application claims priority to Chinese Patent Application No. 202311828079.2, filed with the China National Intellectual Property Administration on December 27, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With the development of technologies, the communication system develops toward a higher frequency band, a larger bandwidth, and denser distribution of a large-scale antenna array, so that a single system can integrate a sensing capability and a communication capability, and performance between systems can be enhanced.

Both wireless communication and wireless sensing are based on an electromagnetic wave theory. An electromagnetic wave signal is modulated at a transmit end, so that an electromagnetic wave carries source information. The electromagnetic wave signal is affected by a wireless environment in a propagation process. In other words, the electromagnetic wave signal is modulated by the environment, and therefore also carries environment information. By analyzing the electromagnetic wave signal, a receive end can not only obtain the carried source information, but also extract sensing information that reflects a propagation environment characteristic, which makes integrated sensing and communication (integrated sensing and communication, ISAC) possible. Compared with a system in which sensing and communication are separated, an integrated sensing and communication system has many advantages, for example, reducing costs, reducing a device size, reducing power consumption, improving spectral efficiency, and reducing mutual interference between communication and sensing.

There may be massive sensing data in a communication system, and a transmission manner of signaling and data in the existing communication system is not applicable to transmission of massive sensing data. Therefore, how to transmit the sensing data is an urgent problem to be resolved.

### SUMMARY

Embodiments of this application provide a communication method and apparatus, to improve data transmission efficiency.

According to a first aspect, this application provides a communication method. The method may be applied to a data communication proxy, a component (for example, a processor, a chip, a chip system, a circuit, or the like) configured in the data communication proxy, or a software module. The data communication proxy is deployed in a 3rd Generation Partnership Project (3rd Generation Partnership Project, 3GPP) network, and the data communication proxy supports a plurality of transmission protocols. The method may include: receiving a first subscription message from a first network element in the 3GPP network, where the first subscription message is used to subscribe to data of a first information type; receiving first data from a second network element in the 3GPP network, where the first data is data of the first information type, and the first data is encapsulated by using a first transmission protocol in the plurality of transmission protocols; and sending the first data to the first network element.

According to the method, data transmission can be directly performed through the data communication proxy, to improve data transmission efficiency. In addition, the data communication proxy supports a plurality of transmission protocols, to meet different service scenarios.

In a possible design, the plurality of transmission protocols include a plurality of transmission protocols in the following: a transmission control protocol (transmission control protocol, TCP), a user datagram protocol (user datagram protocol, UDP), or a quick UDP internet connection (quick UDP internet connection, QUIC) protocol.

In a possible design, the first transmission protocol is indicated by a sensing service control function network element. In this way, an encapsulation form of the first data can be determined.

In a possible design, the first network element is a first access network device, and the second network element is a second access network device; the first network element is a first core network device, and the second network element is a second core network device; the first network element is an access network device, and the second network element is a core network device; or the first network element is a core network device, and the second network element is an access network device. In other words, the access network device and the core network device each may be used as a data producer to publish data, or may be used as a data consumer to subscribe to data.

In a possible design, the first network element is a sensing data processing function network element, the second network element is an access network device, and the first information type is indicated by a sensing service control function network element; the first network element is a sensing data processing function network element, the second network element is a user plane function network element, and the first information type is indicated by a sensing service control function network element; or the first network element is a network exposure function network element, the second network element is a sensing data processing function network element, and the first information type is indicated by the sensing service control function network element. For example, when the first network element is a sensing data processing function network element, the sensing data processing function network element serves as a data consumer to subscribe to data; or when the second network element is a sensing data processing function network element, the sensing data processing function network element serves as a data producer to publish data. An information type of the data subscribed by the data consumer and an information type of the data published by the data producer may be indicated by the sensing service control function network element.

In a possible design, before the first data is sent to the first network element, a data request message may be further received from the first network element. In this way, after the first network element initiates a data request, the data communication proxy may send the first data to the first network element.

In a possible design, a first message is received, where the first message is used to create a data producer. In this way, the data producer can subsequently publish data.

In a possible design, the first message may include one or more of the following: a data producer name, a used transmission protocol, quality of service (quality of service, QoS), or a supported data compression algorithm. In this way, the data producer who publishes data, the transmission protocol used for data publish, and the supported data compression form can be determined, so that the data producer can accurately publish data.

In a possible design, a second message is received, where the second message is used to delete a data producer. In this way, the data producer is deleted after the service is stopped, so that resources can be saved.

In a possible design, the second message includes an identity of the data producer. In this way, the data producer can be accurately deleted.

In a possible design, a third message is received, where the third message is used to create a data consumer. In this way, data consumers can subsequently subscribe to data.

In a possible design, the third message may include one or more of the following: a data consumer name, a used transmission protocol, a data consumer group identity, QoS, or a supported data compression algorithm. In this way, the data consumer who subscribes to data, the transmission protocol used for data subscription, and the supported data compression form can be determined, so that the data consumer can accurately subscribe to data.

In a possible design, a fourth message is received, where the fourth message is used to delete a data consumer. In this way, the data consumer is deleted after the service is stopped, so that resources can be saved.

In a possible design, the fourth message includes an identity of the data consumer. In this way, the data consumer can be accurately deleted.

According to a second aspect, this application provides a communication method. The method may be applied to a first network element, a component (for example, a processor, a chip, a chip system, a circuit, or the like) configured in the first network element, or a software module. The first network element is deployed in a 3GPP network. The method may include: receiving a first control message from a sensing service control function network element in the 3GPP network, where the first control message indicates to receive data of a first information type; sending a first subscription message to a data communication proxy in the 3GPP network, where the first subscription message is used to subscribe to the data of the first information type, and the data communication proxy supports a plurality of transmission protocols; and receiving first data from the data communication proxy, where the first data is data of the first information type, and the first data is encapsulated by using a first transmission protocol in the plurality of transmission protocols.

According to the foregoing method, a data consumer can directly subscribe to needed data from the data communication proxy without interacting with a data producer, so that data transmission efficiency can be improved. In addition, the data communication proxy supports a plurality of transmission protocols, to meet different service scenarios.

In a possible design, the plurality of transmission protocols include a plurality of transmission protocols in the following: a TCP, a UDP, or a QUIC protocol.

In a possible design, the first transmission protocol is indicated by a sensing service control function network element. In this way, an encapsulation form of the first data can be determined.

In a possible design, before the first data is received from the data communication proxy, a data request message may be further sent to the data communication proxy. In this way, when there is a demand for data, the first network element may request the data from the data communication proxy.

In a possible design, a third message is sent to the data communication proxy, where the third message is used to create a data consumer. In this way, data consumers can subsequently subscribe to data.

In a possible design, the third message may include one or more of the following: a data consumer name, a used transmission protocol, a data consumer group identity, QoS, or a supported data compression algorithm. In this way, the data consumer who subscribes to data, the transmission protocol used for data subscription, and the supported data compression form can be determined, so that the data consumer can accurately subscribe to data.

In a possible design, a first service stop message is received from the sensing service control function network element; and a fourth message is sent to the data communication proxy, where the fourth message is used to delete a data consumer. In this way, the data consumer is deleted after the service is stopped, so that resources can be saved.

In a possible design, the fourth message includes an identity of the data consumer. In this way, the data consumer can be accurately deleted.

According to a third aspect, this application provides a communication method. The method may be applied to a second network element, a component (for example, a processor, a chip, a chip system, a circuit, or the like) configured in the second network element, or a software module. The first network element is deployed in a 3GPP network. The method may include: receiving a second control message from a sensing service control function network element in the 3GPP network, where the second control message indicates to send data of a first information type; and sending first data to a data communication proxy in the 3GPP network, where the first data is data of the first information type, the data communication proxy supports a plurality of transmission protocols, and the first data is encapsulated by using a first transmission protocol in the plurality of transmission protocols.

According to the foregoing method, a data producer can directly publish data to the data communication proxy, without interacting with the data consumer, so that data transmission efficiency can be improved. In addition, the data communication proxy supports a plurality of transmission protocols, to meet different service scenarios.

In a possible design, the plurality of transmission protocols include a plurality of transmission protocols in the following: a TCP, a UDP, or a QUIC protocol.

In a possible design, the first transmission protocol is indicated by a sensing service control function network element. In this way, an encapsulation form of the first data can be determined.

In a possible design, a first message is sent to the data communication proxy, where the first message is used to create a data producer. In this way, the data producer can subsequently publish data.

In a possible design, the first message may include one or more of the following: a data producer name, a used transmission protocol, quality of service QoS, or a supported data compression algorithm. In this way, the data producer who publishes data, the transmission protocol used for data publish, and the supported data compression form can be determined, so that the data producer can accurately publish data.

In a possible design, a second service stop message is received from the sensing service control function network element; and a second message is sent to the data communication proxy, where the second message is used to delete a data producer. In this way, the data producer is deleted after the service is stopped, so that resources can be saved.

In a possible design, the second message includes an identity of the data producer. In this way, the data producer can be accurately deleted.

According to a fourth aspect, this application further provides a communication apparatus. The communication apparatus may be used in a data communication proxy or a module (for example, a processor, a chip, or a chip system) in the data communication proxy. The communication apparatus has functions of implementing the first aspect or the possible design examples of the first aspect. The function may be implemented by hardware, or may be implemented by executing corresponding software by hardware. The hardware or software includes one or more modules corresponding to the foregoing functions.

In a possible design, a structure of the communication apparatus includes an interface module and a processing module, where the interface module supports a plurality of transmission protocols, and the processing module is configured to process related information of a data producer and a data consumer. These modules may execute a corresponding function in the first aspect or the possible design examples of the first aspect. For details, refer to the detailed descriptions in the method examples. Details are not described herein.

In a possible design, a structure of the communication apparatus includes a communication interface and a processor, where the communication interface supports a plurality of transmission protocols, and the processor is configured to process related information of a data producer and a data consumer. Optionally, the terminal device further includes a memory. Specifically, the communication interface is configured to send/receive information, and is configured to communicate and interact with another device in the system. The processor is configured to support the communication apparatus in executing a corresponding function in the first aspect or the possible design examples of the first aspect. The memory is coupled to the processor, and stores program instructions and data that are necessary for a communication apparatus.

According to a fifth aspect, this application further provides a communication apparatus. The communication apparatus may be used in a first network element or a module (for example, a processor, a chip, or a chip system) in the first network element. The communication apparatus has functions of implementing the second aspect or the possible design examples of the second aspect. The function may be implemented by hardware, or may be implemented by executing corresponding software by hardware. The hardware or software includes one or more modules corresponding to the foregoing functions.

In a possible design, a structure of the communication apparatus may include an interface module and a processing module. These modules may execute a corresponding function in the second aspect or the possible design examples of the second aspect. For details, refer to the detailed descriptions in the method examples. Details are not described herein.

In a possible design, a structure of the communication apparatus includes a communication interface and a processor, and optionally further includes a memory. The communication interface is configured to send/receive information, and is configured to communicate and interact with another device in the system. The processor is configured to support the communication apparatus in executing a corresponding function in the second aspect or the possible design examples of the second aspect. The memory is coupled to the processor, and stores program instructions and data that are necessary for a communication apparatus.

According to a sixth aspect, this application further provides a communication apparatus. The communication apparatus may be used in a second network element or a module (for example, a processor, a chip, or a chip system) in the second network element. The communication apparatus has a function of implementing the third aspect or the possible design examples of the third aspect. The function may be implemented by hardware, or may be implemented by executing corresponding software by hardware. The hardware or software includes one or more modules corresponding to the foregoing functions.

In a possible design, a structure of the communication apparatus may include an interface module and a processing module. These modules may execute a corresponding function in the third aspect or the possible design examples of the third aspect. For details, refer to the detailed descriptions in the method examples. Details are not described herein.

In a possible design, a structure of the communication apparatus includes a communication interface and a processor, and optionally further includes a memory. The communication interface is configured to send/receive information, and is configured to communicate and interact with another device in the system. The processor is configured to support the communication apparatus in executing a corresponding function in the third aspect or the possible design examples of the third aspect. The memory is coupled to the processor, and stores program instructions and data that are necessary for the communication apparatus.

According to a seventh aspect, an embodiment of this application provides a 3GPP network. The 3GPP network may include the data communication proxy, the first network element, the second network element, and the like mentioned above.

According to an eighth aspect, an embodiment of this application provides a computer-readable storage medium. The computer-readable storage medium stores a computer program or computer-executable instructions. When the computer program or the computer-executable instructions are invoked by a computer, the computer is caused to perform the method according to the first aspect and any possible design of the first aspect, the method according to the second aspect and any possible design of the second aspect, or the method according to the third aspect and any possible design of the third aspect in embodiments of this application. For example, the computer-readable storage medium may be any usable medium that can be accessed by the computer. As an example rather than a limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a ninth aspect, an embodiment of this application provides a computer program product, including a computer program or instructions. When the computer program or the instructions are run on a computer, the method according to the first aspect or any possible design of the first aspect, the method according to the second aspect or any possible design of the second aspect, or the method according to the third aspect or any possible design of the third aspect is performed.

According to a tenth aspect, this application further provides a chip, including a processor. The processor is configured to perform the method according to the first aspect or any possible design of the first aspect, the method according to the second aspect or any possible design of the second aspect, or the method according to the third aspect or any possible design of the third aspect.

For each of the fourth aspect to the tenth aspect and technical effects that may be achieved in the aspect, refer to the descriptions of the technical effects that may be achieved in the first aspect or the possible solutions of the first aspect. Details are not described herein again.

### BRIEF DESCRIPTION OF DRAWINGS

FIG. 1 is a diagram of a sensing scenario according to this application;
FIG. 2 is a diagram of DCP-based data transmission according to this application;
FIG. 3 is a diagram of a possible sensing architecture in which a DCP is introduced into a 3GPP network according to this application;
FIG. 4 is a diagram of a protocol stack of sensing data according to this application;
FIG. 5 is a diagram of another possible sensing architecture in which a DCP is introduced into a 3GPP network according to this application;
FIG. 6 is a diagram of another protocol stack of sensing data according to this application;
FIG. 7 is a diagram of another protocol stack of sensing data according to this application;
FIG. 8 is a flowchart of a communication method according to this application;
FIG. 9A to 9C are a flowchart of an example of a communication method according to this application;
FIG. 10A to 10C are a flowchart of an example of another communication method according to this application;
FIG. 11A and 11B are a flowchart of an example of another communication method according to this application;
FIG. 12A and 12B are a flowchart of an example of another communication method according to this application;
FIG. 13 is a diagram of a structure of a communication apparatus according to this application; and
FIG. 14 is a diagram of a structure of a communication apparatus according to this application.

### DESCRIPTION OF EMBODIMENTS

The following further describes in detail this application with reference to accompanying drawings.

Embodiments of this application provide a communication method and apparatus, to improve data transmission efficiency. The method and the apparatus in this application are based on a same technical concept. Because the method and the apparatus have similar principles for resolving a problem, mutual reference may be made between implementations of the apparatus and the method. Repeated parts are not described in detail again.

For ease of understanding by a person skilled in the art, the following first explains some terms in this application.

### (1) Wireless sensing (or referred to as sensing)

Wireless sensing means sensing by using a wireless signal. Sensing is a process of collecting data and processing the collected data to generate a sensing result. For example, a distance to a surrounding obstacle, a shape, a type, and the like of the surrounding obstacle are determined based on collected data. For another example, a breathing frequency, heartbeats, and the like of a monitored object are determined based on collected data. The collected data may be data collected through a sensor, or may be data collected by using a wireless signal.

Both wireless sensing and wireless communication are based on an electromagnetic wave theory. An electromagnetic wave signal is modulated at a transmit end, so that the electromagnetic wave signal carries source information. The electromagnetic wave signal is affected by a wireless environment in a propagation process. In other words, the electromagnetic wave signal is affected by the environment, and therefore can also carry environment information. By analyzing the electromagnetic wave signal, a receive end can not only obtain the carried source information, but also extract sensing information that reflects a propagation environment characteristic. In other words, the electromagnetic wave signal has inherent communication and sensing capabilities, which makes integrated sensing and communication (integrated sensing and communication, ISAC) possible. Integrated sensing and communication may also be referred to as joint communication and sensing (joint communication and sensing, JCAS). Integrated sensing and communication may also be referred to as sensing-communication integration for short. Compared with a system in which sensing and communication are separated, ISAC has a series of advantages, for example, reducing costs, reducing a device size, reducing power consumption, improving frequency efficiency, and reducing mutual interference between communication and sensing.

### (2) Sensing scenario

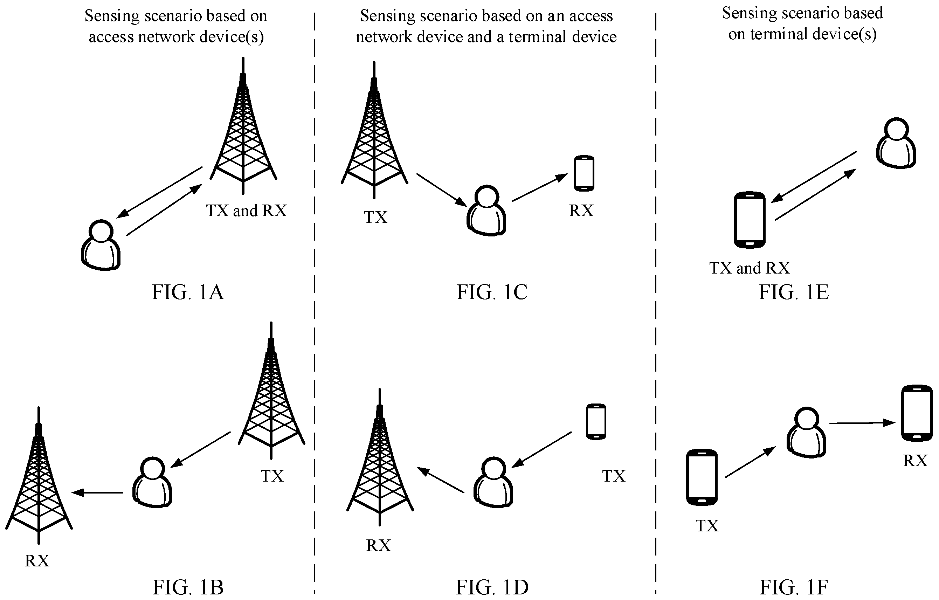

The sensing scenario may be classified into a sensing scenario based on an access network device, a sensing scenario based on an access network device and a terminal device, and a sensing scenario based on a terminal device. For example, for the sensing scenario, refer to sensing scenarios shown in FIG. 1A to FIG. 1F.

The sensing scenario shown in FIG. 1A is a sensing scenario based on an access network device. The access network device serves as a transmit end (transmitting, TX) and a receive end (receiving, RX) of a sensing signal. For example, a sensing signal 1 sent by the access network device arrives at a target object (for example, a person), and the sensing signal 1 is reflected by the target object. The access network device may receive a sensing signal 2, and may further process the sensing signal 2, to obtain a sensing result.

The sensing scenario shown in FIG. 1B is also a sensing scenario based on an access network device. One access network device serves as a transmit end TX of a sensing signal, and the other access network device serves as a receive end RX of a sensing signal. For example, a sensing signal 1 sent by the access network device serving as a TX arrives at a target object, and the sensing signal 1 is reflected by the target object. The access network device serving as an RX may receive a sensing signal 2, and may further process the sensing signal 2, to obtain a sensing result.

The sensing scenario shown in FIG. 1C is a sensing scenario based on an access network device and a terminal device. The access network device serves as a transmit end of a sensing signal, and the terminal device serves as a receive end of a sensing signal. For example, a sensing signal 1 sent by the access network device arrives at a target object, and the sensing signal 1 is reflected by the target object. The terminal device may receive a sensing signal 2, and may further process the sensing signal 2, to obtain a sensing result.

The sensing scenario shown in FIG. 1D is also a sensing scenario based on an access network device and a terminal device. The terminal device serves as a transmit end of a sensing signal, and the access network device serves as a receive end of a sensing signal. For example, a sensing signal 1 sent by the terminal device arrives at a target object, and the sensing signal 1 is reflected by the target object. The access network device may receive a sensing signal 2, and may further process the sensing signal 2, to obtain a sensing result.

The sensing scenario shown in FIG. 1E is a sensing scenario based on a terminal device. The terminal device serves as a transmit end and a receive end of sensing signals. For example, a sensing signal 1 sent by the terminal device arrives at a target object, and the sensing signal 1 is reflected by the target object. The terminal device may receive a sensing signal 2, and may further process the sensing signal 2, to obtain a sensing result.

The sensing scenario shown in FIG. 1F is also a sensing scenario based on a terminal device. One terminal device serves as a transmit end of a sensing signal, and the other terminal device serves as a receive end of a sensing signal. For example, a sensing signal 1 sent by the terminal device serving as a TX arrives at a target object, and the sensing signal 1 is reflected by the target object. The terminal device serving as an RX may receive a sensing signal 2, and may further process the sensing signal 2, to obtain a sensing result.

The sensing signal 2 may be understood as a reflected signal of the sensing signal 1. The sensing signal 2 carries more information than the sensing signal 1, for example, the sensing signal 2 may carry source information and environment information.

### (3) Access network device

The access network device is a device that provides access for a terminal device. The access network device may also be referred to as a network device, an access node (access node, AN), a radio access network (radio access network, RAN) node, or the like. The access network device may be a base station (base station), a long term evolution (long term evolution, LTE) system, or an evolved NodeB (evolved NodeB) in a long term evolution-advanced (long term evolution-advanced, LTE-A) system, which may be referred to as an eNB or an e-NodeB for short, a transmission reception point (transmission reception point, TRP), a next generation base station (next generation NodeB, gNB) in a 5th generation (5th generation, 5G) mobile communication system, a next generation base station in a 6th generation (6th generation, 6G) mobile communication system, a base station in a future mobile communication system, or an access node in a wireless fidelity (wireless fidelity, Wi-Fi) system, or may be an access network device in an open radio access network (open RAN, ORAN) system. Optionally, the access network device may be a module or unit that implements some functions of the base station. For example, the access network device may be a central unit (central unit, CU), a distributed unit (distributed unit, DU), a CU-control plane (control plane, CP), a CU-user plane (user plane, UP), or a radio unit (radio unit, RU). The CU completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. In different systems, the CU (or the CU-CP and the CU-UP), the DU, or the RU may alternatively have different names, but a person skilled in the art may understand meanings thereof. For example, in the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU.

For example, the access network device may be a macro base station, may be a micro base station (also referred to as a small cell) or an indoor base station, or may be a relay node or a donor node. The access network device may alternatively be a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a remote radio unit (remote radio unit, RRU), a wireless fidelity (wireless fidelity, Wi-Fi) access point (access point, AP), a baseband pool (BBU pool) and an RRU in a cloud radio access network (cloud radio access network, CRAN), or the like.

In this application, the access network device may alternatively be a functional module, a chip, or a chip system. Optionally, the functional module, the chip, or the chip system may be disposed in the access network device.

A specific technology and a specific device form that are used by the access network device are not limited in embodiments of this application.

### (4) Terminal device

The terminal device may also be referred to as user equipment (user equipment, UE), a mobile station (mobile station, MS), a mobile terminal (mobile terminal, MT), or the like, and is a device that provides a user with voice and/or data connectivity. For example, the terminal device may include a hand-held device or a vehicle-mounted device that has a wireless connection function. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, an extended reality (extended reality, XR) device, a mixed reality (mixed reality, MR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device may alternatively be a device-to-device (device-to-device, D2D) terminal device, a vehicle-to-everything (vehicle-to-everything, V2X) communication terminal device, a smart vehicle, an in-vehicle system (or referred to as an internet of vehicles system) (telematics box, TBOX), a machine-to-machine/machine-type communication (machine-to-machine/machine-type communication, M2M/MTC) terminal device, or an Internet of Things (internet of things, IoT) terminal device. For example, the terminal device may be a carrier like a vehicle, a ship, or an aircraft, a terminal-type roadside unit, or a communication module or chip built in the vehicle or the roadside unit. For example, the terminal apparatus may be an in-vehicle module. The terminal device may alternatively be a roadside unit (roadside unit, RSU).

In this application, the terminal device may alternatively be a functional module, a chip, or a chip system. Optionally, the functional module, the chip, or the chip system may be disposed in the terminal device.

A specific technology and a specific device form that are used by the terminal device are not limited in embodiments of this application.

(5) In the descriptions of this application, the terms such as "first" and "second" are merely used for distinguishing for description, and cannot be understood as an indication or implication of relative importance, or cannot be understood as an indication or implication of an order.

(6) In the descriptions of this application, "at least one (type)" means one or more (types), and "a plurality of (types)" means two or more (types). "At least one of the following items" or a similar expression thereof means any combination of these items, including any combination of singular items or plural items. For example, at least one of a, b, or c may indicate a, b, and c, a and b, a and c, b and c, or a, b, and c, where a, b, and c may be singular or plural.

(7) In embodiments of this application, the term "and/or" describes an association relationship between associated objects and may indicate three relationships. For example, A and/or B may indicate the following cases: Only A exists, both A and B exist, and only B exists, where A and B may be singular or plural. "/" indicates "or". For example, a/b indicates a or b.

With diversified development of data transmission (for example, sensing data transmission and artificial intelligence (artificial intelligence, AI) data transmission), a currently existing signaling or data transmission manner cannot meet future data transmission requirements. Based on this, in this application, to improve data transmission efficiency, it is considered that a new network function, for example, a data communication proxy (data communication proxy, DCP), is introduced into a 3rd Generation Partnership Project (3rd Generation Partnership Project, 3GPP) network. It should be understood that the DCP is merely an example of a name, and the "DCP" may be replaced with another name. A device having a same function as the DCP may be considered as a DCP. This is not limited in this application. The DCP may be deployed in the 3GPP network as an independent network element, or may be integrated with a network element or a device in the 3GPP network. This is not limited in this application. Optionally, the DCP may be deployed in an access network, or may be deployed in a core network. This is not limited in this application.

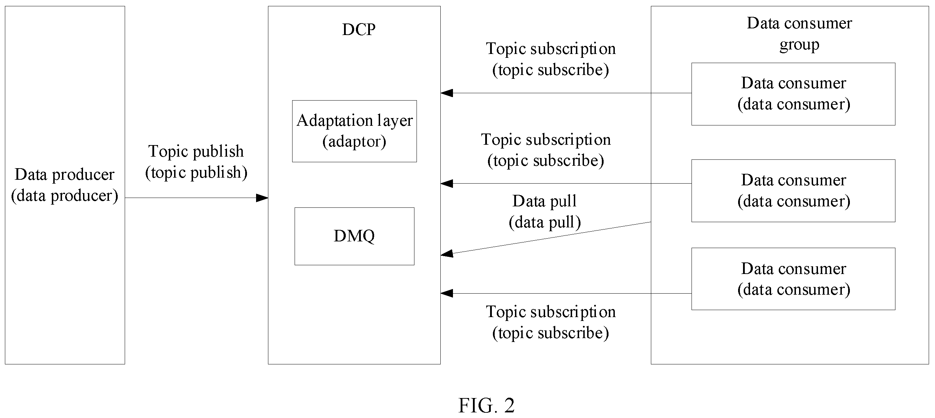

For example, FIG. 2 shows a possible diagram of DCP-based data transmission. A data producer (data producer) sends data to a DCP, for example, topic publish (topic publish) shown in FIG. 2. Data consumers (data consumer) may perform data subscription and data pull (data pull) from the DCP. In some embodiments, each data consumer in a data consumer group may perform data subscription from the DCP, for example, topic subscription (topic subscribe) shown in FIG. 2.

The DCP may support a plurality of transmission protocols, for example, a transmission control protocol (transmission control protocol, TCP), a user datagram protocol (user datagram protocol, UDP), a quick UDP internet connection (quick UDP internet connection, QUIC) protocol, or another transmission protocol. The DCP may include an adaptation layer (adaptor) and a distributed message queue (distributed message queue, DMQ), to support efficient data distribution. The adaptation layer may complete adaptation of a transmission protocol (a transmission protocol like TCP, UDP, or QUIC) of a client (like the data producer or the data consumer), directly interact with the client, and distribute a request of the client to a processing thread. The DMQ can perform message exchange, to be specific, distribute a message published by the data producer to a corresponding data consumer. The DCP supports a concept of data consumer group. To be specific, a message can be consumed by only one data consumer in a same data consumer group, but can be consumed by different data consumer groups.

In some embodiments, the DCP may communicate with the data producer or the data consumers through some interfaces. For example, the DCP may create the data producer through a first interface, or it may be understood as that the DCP creates the data producer by transmitting a message between the DCP and the data producer through the first interface. When creating the data producer, the DCP may receive a data producer name and a used transmission protocol (like TCP, UDP, or QUIC) through the first interface. Optionally, the DCP may further receive quality of service (quality of service, QoS) and/or a supported data compression algorithm through the first interface. When creating the data producer, the DCP may send an identity (identity, ID) of the data producer through the first interface. Optionally, the DCP may further send the selected data compression algorithm through the first interface. Optionally, the DCP may jointly or separately receive one or more of the data producer name, the transmission protocol used by the data producer, the QoS, and the data compression algorithm supported by the data producer. Optionally, the DCP may jointly or separately send the ID of the data producer and/or the data compression algorithm selected by the data producer.

For another example, the DCP may delete the data producer through a second interface, or it may be understood as that the DCP deletes the data producer by transmitting a message between the DCP and the data producer through the second interface. When deleting the data producer, the DCP may receive an ID of the data producer through the second interface.

For another example, the DCP may create the data consumer through a third interface, or it may be understood as that the DCP creates the data consumer by transmitting a message between the DCP and the data consumer through the third interface. When creating the data consumer, the DCP may receive one or more of a data consumer name, a used transmission protocol (like TCP, UDP, or QUIC), and a data consumer group identity (ID) through the third interface. Optionally, the DCP may further receive QoS and/or a supported data compression algorithm through the third interface. When creating the data consumer, the DCP may further send an ID of the data consumer through the third interface. Optionally, the DCP may further send the selected data compression algorithm through the third interface. Optionally, the DCP may jointly or separately receive one or more of the data consumer name, the transmission protocol used by the data consumer, the QoS, and the data compression algorithm supported by the data consumer. Optionally, the DCP may jointly or separately send the ID of the data consumer and/or the data compression algorithm selected by the data consumer.

For another example, the DCP may delete the data consumer through a fourth interface, or it may be understood as that the DCP deletes the data producer by transmitting a message between the DCP and the data consumer through the fourth interface. When deleting the data consumer, the DCP may receive an ID of the data consumer through the fourth interface.

For another example, the DCP may implement data subscription through a fifth interface, or it may be understood as that the DCP implements data subscription of the data consumer by transmitting a message between the DCP and the data consumer through the fifth interface. During data subscription, the DCP may receive an ID of the data consumer and an information type list through the fifth interface. It should be understood that the information type list is only a form, the information type list may include at least one information type, and the at least one information type may be carried in the message in another form. This is not limited in this application. For example, the information type list may include a topic list. Optionally, the DCP may receive subscription duration through the fifth interface. Optionally, the DCP may jointly receive the ID of the data consumer, the information type list, and the subscription duration, or may receive the ID of the data consumer and the information type list in a first message and receive the subscription duration in a second message.

For another example, the DCP may implement data unsubscription through a sixth interface, or it may be understood as that the DCP implements data unsubscription of the data consumer by transmitting a message between the DCP and the data consumer through the sixth interface. During data unsubscription, the DCP may receive an ID of the data consumer and an information type list through the sixth interface. Optionally, the DCP may jointly or separately receive the ID of the data consumer and the information type list.

For another example, the DCP may implement data publish through a seventh interface, or it may be understood as that the DCP implements data publish of the data producer by transmitting a message between the DCP and the data producer through the seventh interface. During data publish, the DCP may receive an ID of the data producer, an information type list, and data through the seventh interface. Optionally, the DCP may jointly or separately receive one or more of the ID of the data producer, the information type list, and the data.

For another example, the DCP may implement data consumption through an eighth interface, or it may be understood as that the DCP implements data consumption of the data consumer by transmitting a message between the DCP and the data consumer through the eighth interface, or it may be understood as a data pull process of the data consumer. During data consumption, the DCP may receive an ID of the data consumer and an information type list through the eighth interface. During data consumption, the DCP may send data needed by the consumer through the eighth interface. Optionally, the DCP may jointly or separately receive the ID of the data producer and the information type list.

It should be noted that the first interface to the eighth interface are merely examples of interface names, and may be replaced with other names. This is not limited in this application. Optionally, the first interface to the eighth interface may be the same, or some of the first interface to the eighth interface may be the same. This is not limited in this application.

In an optional manner, the QoS carried in the message may be represented in the message by using the following values: A value of the QoS in the message is a first value, for example, 0, indicating that data is distributed at most once; a value of the QoS in the message is a second value, for example, 1, indicating that data is distributed at least once; and a value of the QoS in the message is a third value, for example, 2, indicating that data is distributed only once. It should be understood that the values and meanings of the QoS are merely examples for description, and are not intended to limit this application.

In an example, the supported data compression algorithm may include but is not limited to at least one of the following: GZIP (gnuzip), Lempel-Ziv, Deflate, Delta, LZ4, zstd (zstandard), PPMD, Crook, ZPAQ, CMIX, deep compression (Deepzip), NNCP, or the like.

The DCP supports transport layer security (transport layer security, TLS) for data encryption and integrity protection in a TCP-based data transmission scenario or a QUIC-based data transmission scenario. The DCP also supports a data transmission security protocol (datagram transport layer security, DTLS) for data encryption and integrity protection in a UDP-based data transmission scenario.

For example, in this application, the data producer and the data consumer may be different network elements in the 3GPP network, and the different network elements may be network elements of a same type or network elements of different types. For example, the data producer is a first access network device, and the data consumer is a second access network device. For another example, the data producer is a first core network device, and the data consumer is a second core network device. For another example, the data producer is an access network device, and the data consumer is a core network device. For another example, the data producer is a core network device, and the data consumer is an access network device.

Optionally, a same network element in the 3GPP network may serve as a data consumer in one scenario, and serve as a data producer in another scenario. This is not limited in this application.

For example, a transmission mechanism in which data transmission is performed through the DCP may be referred to as a data spine (data spine), or may be referred to as another name. This is not limited in this application.

In this application, the data may be sensing data, AI data, or the like. The sensing data is used as an example for description in the following embodiments.

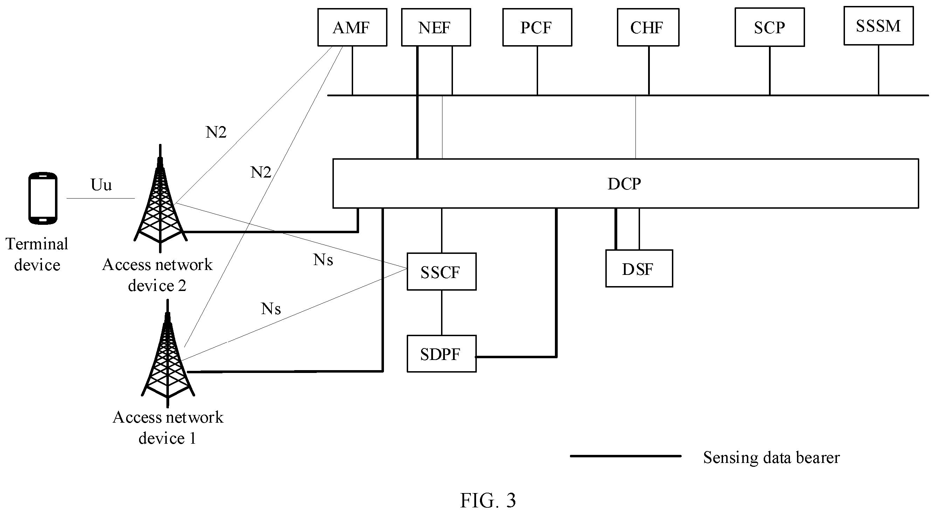

Based on the above, FIG. 3 shows a diagram of a possible sensing architecture in which a DCP is introduced into a 3GPP network. In this sensing architecture, the access network device may be directly connected to the DCP. An access network device 1 serves as a sensing source, and directly transmits sensing data to the DCP. After obtaining sensing data from a terminal device, an access network device 2 transmits the sensing data to the DCP.

In this sensing architecture, a sensing service control function (sensing service control function, SSCF) may be configured to implement a control plane function of a sensing service. For example, the SSCF is configured to receive sensing capability information of a sensing entity and orchestrate the sensing service (including sensing signal receiving/sending entity selection) based on the sensing capability information of the sensing entity. The SSCF may be connected to an SBI bus through a service-based interface (service-based interface, SBI) to communicate with another core network element.

A sensing data processing function (sensing data processing function, SDPF) network element may be configured to implement a data plane function of the sensing service. For example, the SDPF is configured to process sensing data of the sensing service to obtain a sensing result of the sensing service. The SDPF may be mounted to the SBI bus through the SBI to communicate with another core network element, or may perform communication through a separate interface, for example, communicate with another SDPF through a separate interface, or communicate with the SSCF through a separate interface.

A data storage function (data storage function, DSF) network element may store the sensing data.

Core network elements in the sensing structure, for example, an access and mobility management function (access and mobility management function, AMF) network element, a network exposure function (network exposure function, NEF) network element, a policy control function (policy control function, PCF) network element, a charging function (charging function, CHF) network element, a service communication proxy (service communication proxy, SCP), and a sensing service subscriber management (sensing service subscriber management, SSSM) network element, may serve as data consumers to subscribe to data from the DCP, or may serve as data producers to send data to the DCP.

It should be understood that the devices included in the sensing architecture shown in FIG. 3 are merely examples. The sensing architecture may further include another device, or may not include some devices shown in FIG. 3. This is not limited in this application.

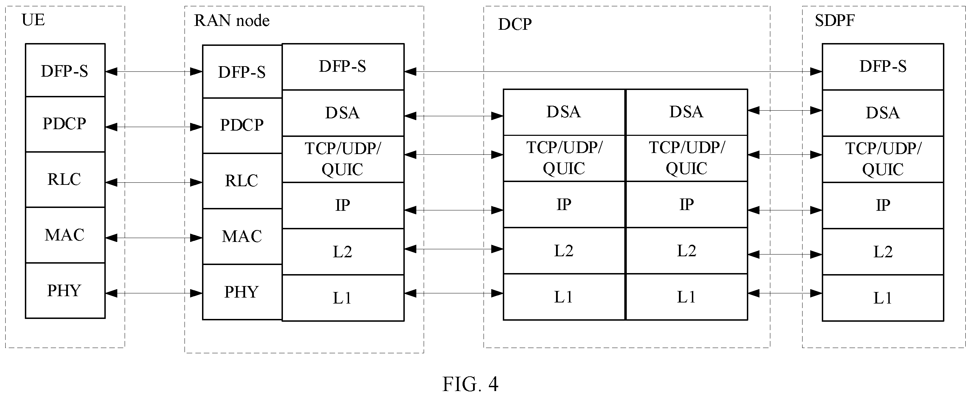

Based on the sensing architecture shown in FIG. 3, an example in which sensing data is from the terminal device is used for description. A protocol stack of the sensing data may be shown in FIG. 4. A data forwarding protocol (data forwarding protocol, DFP-S) is a data processing protocol. Main functions of the DFP-S layer include data collection, data processing, data storage, data analysis, data packet header parsing and reassembly, statistical information reporting, data compression, privacy protection, and the like. A data spine adaptor (data spine adaptor, DSA) layer is a newly introduced protocol layer. A main function of the DSA layer is message queue adaptation (for example, one or more of data consumer creation, data producer creation, data publish, data subscription, data unsubscription, and data consumption). Optionally, the DSA may alternatively be replaced with a message queue adaptor (message queue adaptor, MQA), or may have another name. This is not limited in this application.

In some embodiments, based on the protocol stack shown in FIG. 4, after a RAN node receives the sensing data collected by the UE, the RAN node processes the sensing data at the DFP-S layer, processes the sensing data into a format corresponding to the DSA layer, and sends the sensing data in the format corresponding to the DSA layer to the DCP.

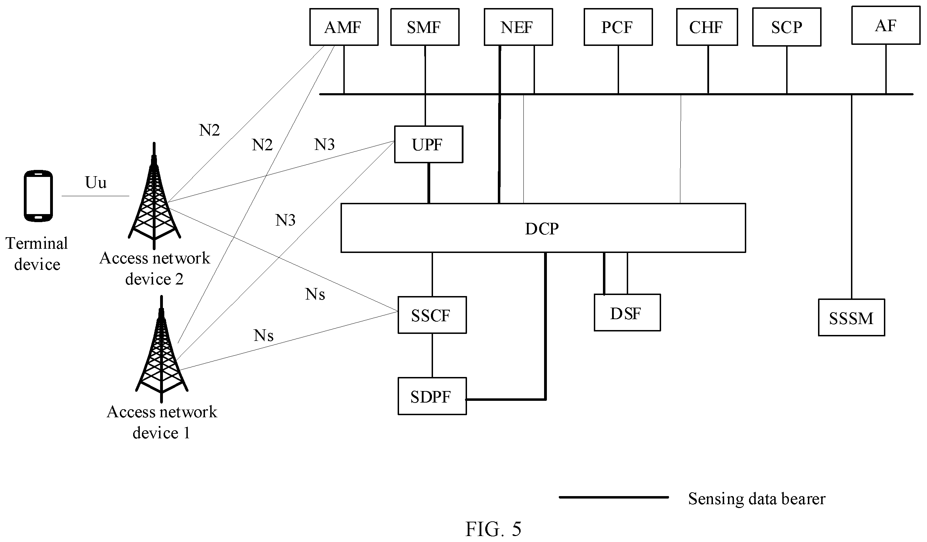

FIG. 5 shows a diagram of another possible sensing architecture in which a DCP is introduced into a 3GPP network. In this sensing structure, sensing data may be transmitted to the DCP through a user plane function (user plane function, UPF) network element. For example, an access network device 1 serves as a sensing source to transmit sensing data to the UPF, and the UPF transmits the sensing data to the DCP. After obtaining sensing data from a terminal device, an access network device 2 transmits the sensing data to the UPF, and the UPF transmits the sensing data to the DCP.

For functions of the SSCF network element, the SDPF network element, and the DSF network element in the sensing structure, refer to the related descriptions in the sensing architecture shown in FIG. 3. Details are not described herein again.

Similarly, core network elements in the sensing structure, for example, an AMF network element, a session management function (session management function, SMF) network element, an NEF network element, a PCF network element, a CHF, an SCP, an SSSM, and an application function (application function, AF) network element, may serve as data consumers to subscribe to data from the DCP, or may serve as data producers to send data to the DCP.

It should be understood that the devices included in the sensing architecture shown in FIG. 5 are merely examples. The sensing architecture may further include another device, or may not include some devices shown in FIG. 5. This is not limited in this application.

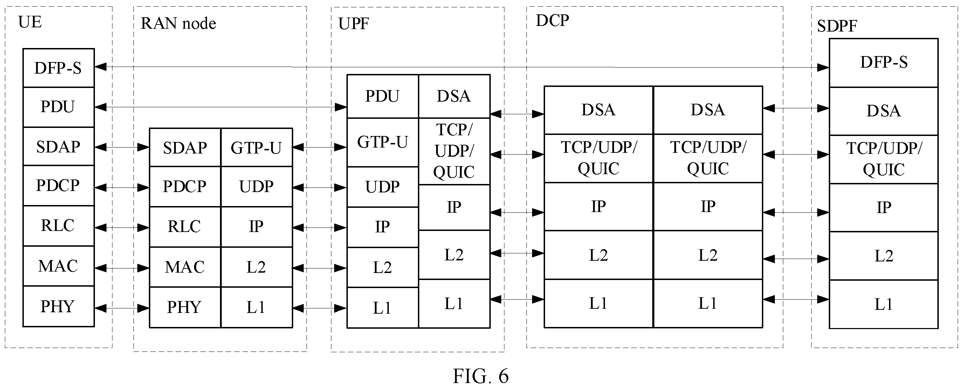

Based on the sensing architecture shown in FIG. 5, an example in which sensing data is from the terminal device is used for description. In a possible manner, the access network device may transparently transmit the sensing data of the terminal device to the UPF, without processing the sensing data. In this case, a protocol stack of the sensing data may be shown in FIG. 6. The access network device (for example, a RAN node) may not include a DSA layer, and the UPF and the DCP each include a DSA layer for processing the received sensing data.

In some embodiments, after the UE collects the sensing data, and sends the sensing data to the UPF through the RAN node, the UPF processes a format corresponding to the PDU layer of sensing data of a PDU session into a format corresponding to the DSA layer, and sends the sensing data in the format corresponding to the DSA layer to the DCP.

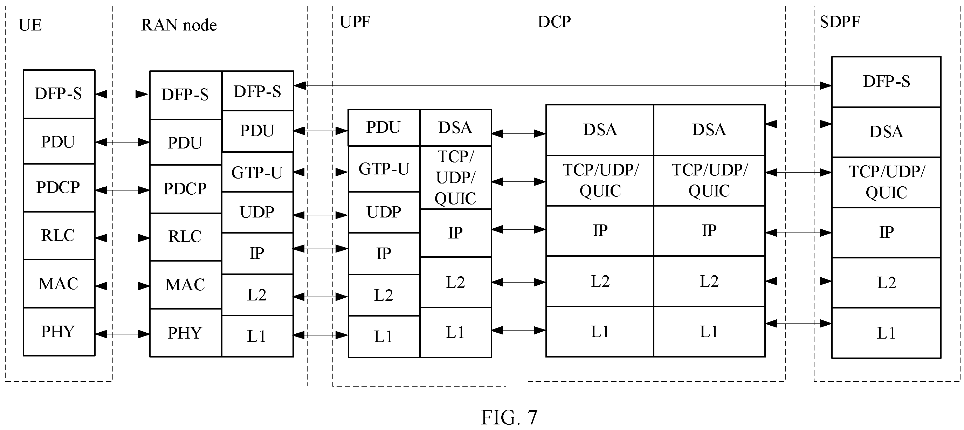

In another possible manner, after receiving the sensing data of the terminal device, the access network device needs to process the sensing data. In this case, a protocol stack of the sensing data may be shown in FIG. 7.

In some embodiments, after the RAN node receives the sensing data collected by the UE, the RAN node processes the sensing data at the DFP-S layer, and sends the processed sensing data to the UPF; and the UPF processes a format corresponding to the PDU layer of sensing data of a PDU session into a format corresponding to the DSA layer, and sends the sensing data in the format corresponding to the DSA layer to the DCP.

It should be understood that the access network device may also be used as a sensing data source, that is, the access network device collects sensing data. In this case, a protocol stack corresponding to the sensing data may be a protocol stack obtained after a protocol layer of the UE and a protocol layer in a left column of the RAN node are removed from the protocol stack shown in FIG. 7, and is not shown in the figure.

Embodiments of this application may be applied to a communication system evolved after 5G, for example, a 5G system or a 6G system, and a wireless communication system like a satellite communication system or a short-range communication system. The wireless communication system mentioned in embodiments of this application includes but is not limited to three application scenarios of the 5G/6G system: enhanced mobile broadband (enhanced Mobile Broadband, eMBB), ultra-reliable low-latency communication (ultra-reliable low-latency communication, URLLC) and massive machine-type communication (massive machine-type communication, mMTC), and a long range (long range, LoRa) internet of things system or an internet of vehicles system. Embodiments of this application may be further applied to an ORAN system and the like.

Based on the foregoing descriptions, the communication method provided in embodiments of this application is described in detail below. In the following embodiments, an operation performed by a device (or a network element) may alternatively be performed through a processor, a chip, a chip system, a functional module, or the like of the device (or the network element). This application is described by using only an example in which a device (or a network element) performs an operation, but this application is not limited thereto.

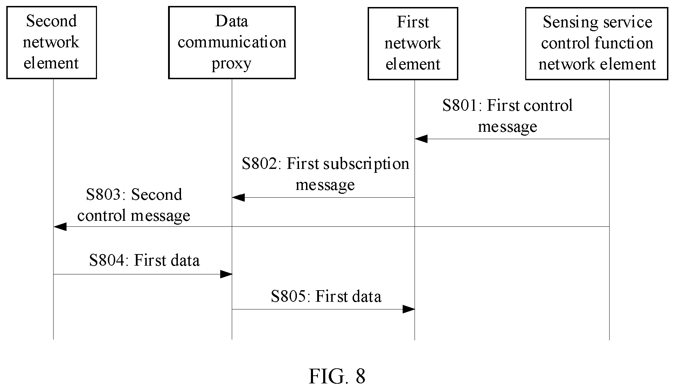

For example, FIG. 8 shows a schematic flowchart of a communication method according to an embodiment of this application. A procedure of the method may include the following steps.

S801: A sensing service control function SSCF network element in a 3GPP network sends a first control message to a first network element in the 3GPP network, where the first control message indicates to receive data of a first information type. Correspondingly, the first network element receives the first control message from the sensing service control function SSCF network element.

In this application, the data may be sensing data, AI data, or the like. The sensing data is used as an example for description in illustrations of this application. It should be understood that the illustrations are not intended to limit this application.

In some implementations, after receiving a sensing service request message from a third-party entity, the sensing service control function SSCF network element may determine a sensing entity associated with a sensing service. For example, the sensing service control function SSCF network element may select a second network element as the sensing entity associated with the sensing service.

The third-party entity may be an entity requesting the sensing service.

In an implementation, the third-party entity may directly send the sensing service request message to the sensing service control function SSCF network element. In another implementation, the third-party entity may send the sensing service request message to the sensing service control function SSCF network element through a network exposure function NEF network element.

Optionally, the first control message may be a first sensing control message.

In an example, the information type may be a topic (topic) or another type. Correspondingly, the data of the first information type is data with a topic.

S802: The first network element sends a first subscription message to a data communication proxy DCP, where the first subscription message is used to subscribe to the data of the first information type. Correspondingly, the data communication proxy DCP receives the first subscription message from the first network element.

In an optional implementation, the first subscription message may include an ID of a data consumer and an information type list. For example, the information type list may include a topic list.

Optionally, the first subscription message may further include subscription duration.

S803: The sensing service control function SSCF network element sends a second control message to the second network element in the 3GPP network, where the second control message indicates to send the data of the first information type. Correspondingly, the second network element receives the second control message from the sensing service control function SSCF network element.

Optionally, the second control message may be a second sensing control message.

S804: The second network element sends first data to the data communication proxy DCP. Correspondingly, the data communication proxy DCP receives the first data from the second network element. The first data is data of the first information type, and the first data is encapsulated by using a first transmission protocol in a plurality of transmission protocols supported by the data communication proxy DCP.

For example, the plurality of transmission protocols supported by the data communication proxy DCP may include a plurality of transmission protocols in the following: a TCP, a UDP, a QUIC protocol, or the like.

Optionally, the first transmission protocol may be indicated by the sensing service control function SSCF network element. For example, the sensing service control function SSCF network element may indicate the first transmission protocol by using the second control message, or the sensing service control function SSCF network element may indicate the first transmission protocol by using another message. This is not limited in this application.

In an optional implementation, when sending the first data to the data communication proxy DCP, the second network element may further send an identity of the second network element and the first information type to the data communication proxy DCP. It should be understood that the first data, the identity of the second network element, and the first information type may be sent in a same message, or may be sent in different messages. This is not limited in this application.

S805: The data communication proxy DCP sends the first data to the first network element. Correspondingly, the first network element receives the first data from the data communication proxy DCP.

In an optional implementation, the first network element may be a data consumer, and the second network element may be a data producer. For example, the first network element and the second network element may be the following devices. To be specific, the first network element is a first access network device, and the second network element is a second access network device; the first network element is a first core network device, and the second network element is a second core network device; the first network element is an access network device, and the second network element is a core network device; or the first network element is a core network device, and the second network element is an access network device.

For example, in a scenario a1, the first network element may be a service sensing data processing function SDPF network element, and the second network element may be an access network device.

In the scenario a1, the sensing data processing function SDPF network element subscribes to the data of the first information type from the data communication proxy DCP, and the access network device sends the first data of the first information type to the data communication proxy DCP.

In the scenario a1, in an implementation, a terminal device is a sensing data source. After obtaining sensing data from the terminal device, the access network device sends the first data to the data communication proxy DCP. In another implementation, the access network device is a sensing data source. After collecting sensing data, the access network device sends the first data to the data communication proxy DCP.

In a scenario a2, the first network element is a sensing data processing function SDPF network element, and the second network element is a user plane function UPF network element.

In the scenario a2, the sensing data processing function SDPF network element subscribes to the data of the first information type from the data communication proxy DCP, and the user plane function UPF network element sends the first data of the first information type to the data communication proxy DCP.

In the scenario a2, in an implementation, a terminal device is a sensing data source. After obtaining sensing data from the terminal device, the access network device forwards the sensing data to the user plane function UPF network element, and then the user plane function UPF network element sends the first data to the data communication proxy DCP. In another implementation, a terminal device is a sensing data source. After obtaining sensing data from the terminal device, the access network device processes the sensing data and sends the processed sensing data to the user plane function UPF network element, and then the user plane function UPF network element sends the first data to the data communication proxy DCP. In another implementation, the access network device is a sensing data source. After collecting sensing data, the access network device sends the sensing data to the user plane function UPF network element, and then the user plane function UPF network element sends the first data to the data communication proxy DCP.

In a scenario a3, the first network element is a network exposure function NEF network element, and the second network element is a sensing data processing function SDPF network element.

In the scenario a3, the network exposure function NEF network element subscribes to the data of the first information type from the data communication proxy DCP, and the sensing data processing function SDPF network element sends the first data of the first information type to the data communication proxy DCP.

In the scenario a3, the sensing data processing function SDPF network element may first subscribe to data of another information type from the data communication proxy DCP, process the obtained data of the another information type to obtain the first data of the first information type, and then send the first data to the data communication proxy DCP.

In the foregoing scenarios, the first information type may be indicated by the sensing service control function SSCF network element. For example, as mentioned above, the first information type is indicated by the sensing service control function SSCF network element to the first network element by using the first control message, and the first information type is indicated by the sensing service control function SSCF network element to the second network element by using the second control message.

In an optional implementation, in addition to the manner in which the data communication proxy DCP directly sends the first data to the first network element in S805, in a possible manner, before directly sending the first data to the first network element, the data communication proxy DCP receives a data request message from the first network element. In other words, when the first network element needs data, the first network element may send the data request message to the data communication proxy DCP, and the data communication proxy DCP may send the first data to the first network element after receiving the data request message from the first network element.

Optionally, the data request message may include the ID of the data consumer and the first information type.

In some embodiments, the second network element may send a first message to the data communication proxy DCP, where the first message is used to create a data producer. Correspondingly, the data communication proxy DCP may receive the first message from the second network element.

For example, the first message may include one or more of the following: a data producer name, a used transmission protocol, QoS, or a supported data compression algorithm. For specific descriptions, refer to the foregoing related descriptions. Details are not described herein again.

Optionally, the second network element may send the first message to the data communication proxy DCP when a system is started; or the second network element may send the first message to the data communication proxy DCP when a sensing task is started, for example, the second network element may send the first message to the data communication proxy DCP after receiving the second control message.

The data communication proxy DCP may also send a response message of the first message to the second network element, where the response message of the first message may include an identity of the data producer. Optionally, the response message of the first message may further include the selected data compression algorithm.

In some embodiments, after receiving a second service stop message from the sensing service control function SSCF network element, the second network element may send a second message to the data communication proxy DCP, where the second message is used to delete a data producer. Correspondingly, the data communication proxy DCP receives the second message from the second network element.

For example, the second message may include an identity of the data producer.

In some embodiments, the first network element may send a third message to the data communication proxy DCP, where the third message is used to create a data consumer. Correspondingly, the data communication proxy DCP may receive the third message from the first network element.

For example, the third message may include one or more of the following: a data consumer name, a used transmission protocol, a data consumer group identity, QoS, or a supported data compression algorithm. For specific descriptions, refer to the foregoing related descriptions. Details are not described herein again.

Optionally, the first network element may send the third message to the data communication proxy DCP when a system is started; or the first network element may send the third message to the data communication proxy DCP when a sensing task is started, for example, the first network element may send the third message to the data communication proxy DCP after receiving the first control message.

The data communication proxy DCP may also send a response message of the third message to the first network element, where the response message of the third message may include an identity of the data consumer. Optionally, the response message of the third message may further include the selected data compression algorithm.

In some implementations, after receiving a first service stop message from the sensing service control function SSCF network element, the first network element may send a fourth message to the data communication proxy DCP, where the fourth message is used to delete a data consumer. Correspondingly, the data communication proxy DCP receives the fourth message from the first network element.

For example, the fourth message may include an identity of the data consumer.

According to the communication method shown in FIG. 8, data transmission can be directly performed through the data communication proxy DCP, to improve data transmission efficiency. In addition, the data communication proxy supports a plurality of transmission protocols, to meet different service scenarios. In addition, according to the communication method in this application, for data transmission based on the data communication proxy, a binding relationship between a data producer and a data consumer is not necessary, and the data producer and the data consumer may be decoupled, so that the data transmission is flexible.

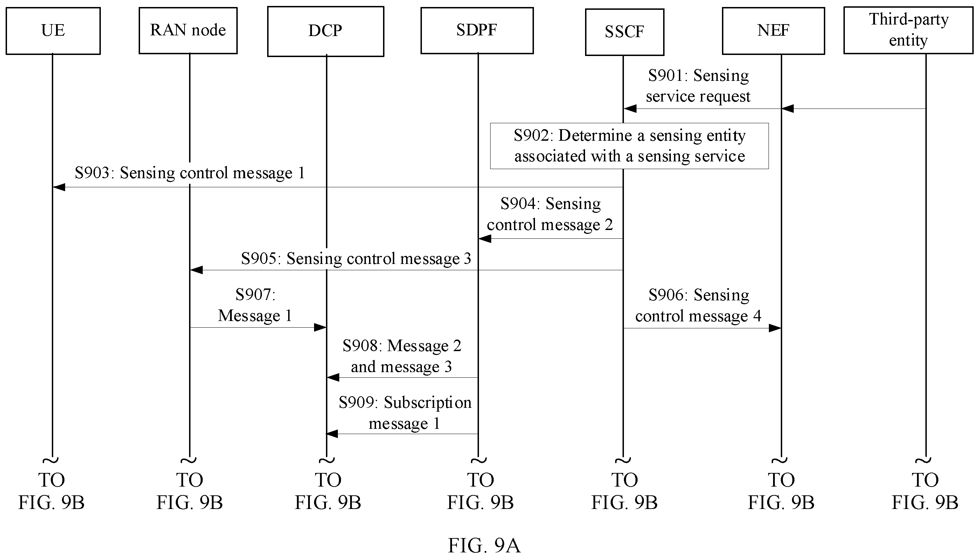

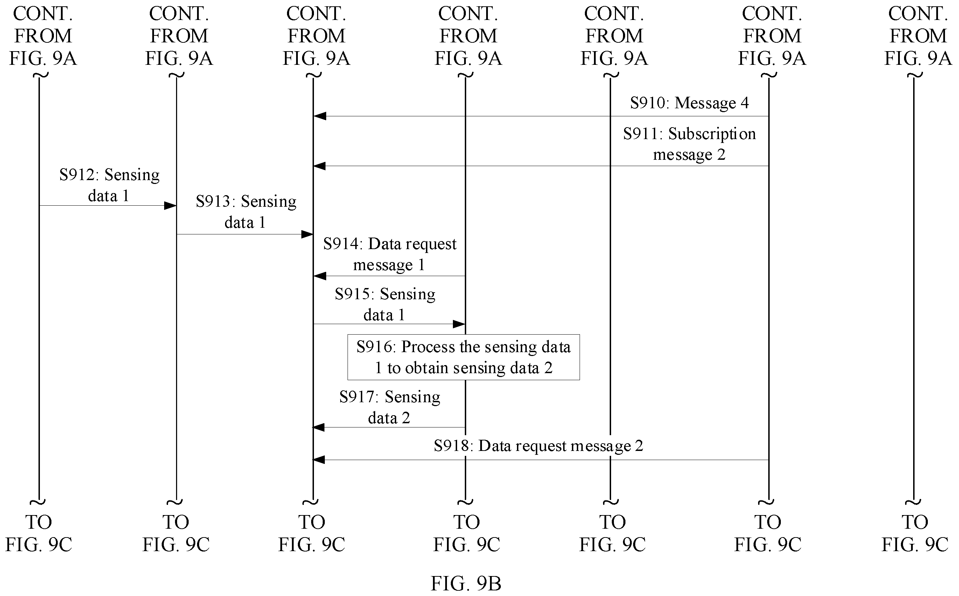

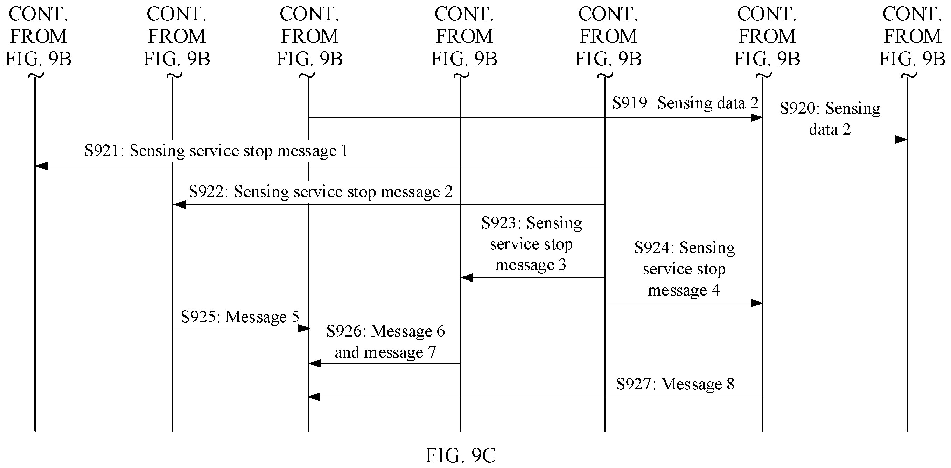

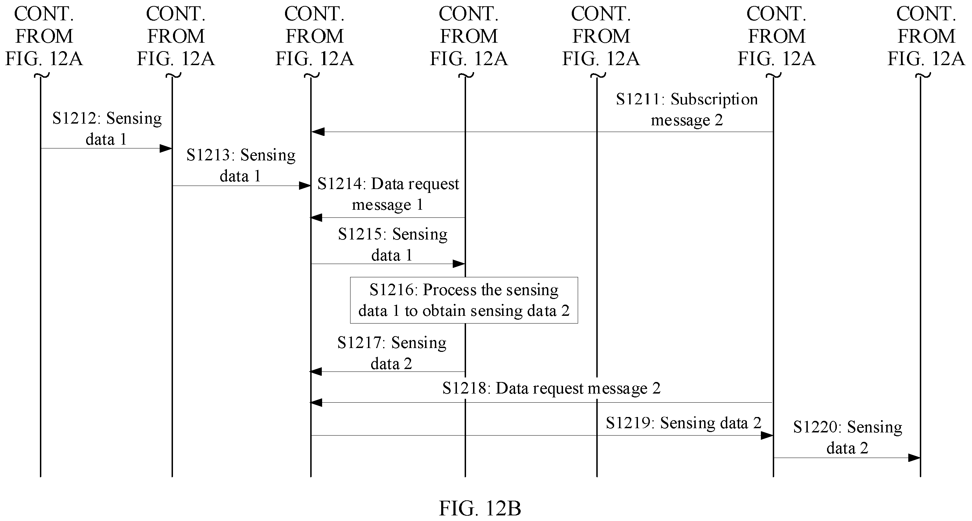

Based on the foregoing embodiments, the communication method provided in this application is described below by using examples shown in FIG. 9A to 9C to FIG. 12A and 12B. In the following examples, descriptions are provided by using an example in which data is sensing data, and an information type is a topic.

For example, FIG. 9A to 9C show an example of a communication method. In this example, UE is a sensing data source. This example corresponds to the sensing architecture shown in FIG. 3, where the RAN node may be directly connected to the DCP. For example, the example shown in FIG. 9A to 9C may include the following steps.

S901: A third-party entity sends a sensing service request to an SSCF.

Optionally, the third-party entity may send the sensing service request to the SSCF through an NEF. S901 in FIG. 9A to 9C is shown as an example. It should be understood that the third-party entity may directly send the sensing service request to the SSCF.

In some embodiments, the sensing service request may carry one or more of a sensing service type, a sensing data type of a sensing service, or a sensing service identity. Optionally, the sensing service type may include but is not limited to one or more of the following types: an environment type, a monitoring type, an imaging type, a positioning type, or the like. The environment type may include but is not limited to one or more of an ambient temperature, ambient humidity, air quality, a weather condition, crowd density, vehicle flow density, atmospheric pressure, or the like. The monitoring type may include but is not limited to one or more of monitoring such as movement monitoring, intrusion monitoring, fall monitoring, or health monitoring. The movement monitoring may include but is not limited to one or more of distance monitoring, location monitoring, movement speed monitoring, movement path monitoring, or the like. The health monitoring may include but is not limited to one or more of information such as a breathing frequency or heartbeats. The imaging type may include but is not limited to one or more of medical imaging, 3D map imaging, 3D map construction, building imaging, body temperature imaging, or the like.

Optionally, the sensing service request may also include one or more of the following: an identity of the third-party entity, area information of the sensing service, or sensing requirement information of the sensing service.

For example, the third-party entity may be any entity that requests the sensing service. This is not limited in this application.

S902: The SSCF determines a sensing entity associated with the sensing service.

For example, the SSCF may select a transmission entity for sensing data, for example, UE, a RAN node, or an SDPF.

S903: The SSCF sends a sensing control message 1 to the UE. The sensing control message 1 indicates the UE to collect the sensing data.

In some embodiments, the sensing control message 1 may carry one or more of a sensing service type, a sensing data type of a sensing service, a sensing service identity, area information of the sensing service, or sensing requirement information of the sensing service. For details about the sensing service type, refer to the descriptions in S901.

Optionally, the information carried in the sensing control message 1 may alternatively be sent to the UE in another message, or may be determined by the UE in another manner. This is not limited in this application.

S904: The SSCF sends a sensing control message 2 to the SDPF, where the sensing control message 2 indicates the SDPF to subscribe to data with a topic 1, and publish the data by using a topic 2 after performing data analysis on the data with the topic 1.

In this case, the SDPF can be either a data consumer or a data producer. When the SDPF is a data consumer, the SDPF may subscribe to the data with the topic 1, and in this case, the SDPF may correspond to the foregoing first network element. When the SDPF is a data producer, the SDPF may publish the data with the topic 2, and in this case, the SDPF may correspond to the foregoing second network element.

S905: The SSCF sends a sensing control message 3 to the RAN node, where the sensing control message 3 indicates the RAN node to publish the data with the topic 1.

For example, the RAN node is a data producer, and the RAN node may correspond to the foregoing second network element.

S906: The SSCF sends a sensing control message 4 to the NEF, where the sensing control message 4 indicates the NEF to subscribe to the data with the topic 2.

For example, the NEF is a data consumer, and the NEF may correspond to the foregoing first network element.

It should be understood that a sequence of S903 to S906 is merely an example, and is not limited in this application.

S907: The RAN node sends a message 1 to a DCP, where the message 1 is used to create a data producer.

The message 1 may include one or more of the following: a data producer name, a used transmission protocol, QoS, or a supported data compression algorithm.

For example, the data producer name in the message 1 may be a name defined by the RAN node, for example, may be a RAN node name, may be in another character string form, or may be in any other form. This is not limited in this application.

S907 is optional.

S908: The SDPF sends a message 2 and a message 3 to the DCP, where the message 2 is used to create a data producer, and the message 3 is used to create a data consumer.

The message 2 may include one or more of the following: a data producer name, a used transmission protocol, QoS, or a supported data compression algorithm.

For example, the data producer name in the message 2 may be a name defined by the SDPF, for example, may be an SDPF name, may be in another character string form, or may be in any other form. This is not limited in this application.

The message 3 may include one or more of the following: a data consumer name, a used transmission protocol, a data consumer group identity, QoS, or a supported data compression algorithm.

For example, the data consumer name in the message 3 may be a name defined by the SDPF, for example, may be an SDPF name, may be in another character string form, or may be in any other form. This is not limited in this application.

S908 is optional.

A sequence of S907 and S908 is not limited in this application.

S909: The SDPF sends a subscription message 1 to the DCP, where the subscription message 1 is used for the data with the topic 1.

For example, the subscription message 1 may include an ID of a data consumer and a topic list.

For example, the ID of the data consumer included in the subscription message 1 is an ID of a data consumer returned by the DCP to the SDPF after the SDPF sends the message 3 to the DCP to create the data consumer.

Optionally, the subscription message 1 may further include subscription duration.

S910: The NEF sends a message 4 to the DCP, where the message 4 is used to create a data consumer.

The message 4 may include one or more of the following: a data consumer name, a used transmission protocol, a data consumer group identity, QoS, or a supported data compression algorithm.

For example, the data consumer name in the message 4 may be a name defined by the NEF, for example, may be an NEF name, may be in another character string form, or may be in any other form. This is not limited in this application.

S910 is optional.

S911: The NEF sends a subscription message 2 to the DCP, where the subscription message 2 is used to subscribe to the data with the topic 2.

For example, the subscription message 2 may include an ID of a data consumer and a topic list.

For example, the ID of the data consumer included in the subscription message 2 is an ID of a data consumer returned by the DCP to the NEF after the NEF sends the message 4 to the DCP to create the data consumer.

Optionally, the subscription message 2 may further include subscription duration.

S912: The UE collects sensing data 1, and sends the sensing data 1 to the RAN node.

The sensing data 1 is data with the topic 1.

S913: The RAN node sends the sensing data 1 to the DCP.

It should be understood that S912 is described by using an example in which the UE collects the sensing data 1 with the topic 1, and then the RAN node directly forwards the sensing data 1 to the DCP. It should be understood that, in another possible manner, after the UE collects the sensing data and sends the sensing data to the RAN node, the RAN node processes the sensing data obtained by the UE to obtain the sensing data 1 with the topic 1, and then sends the sensing data 1 to the DCP.

For example, the RAN node may further send, to the DCP, an ID of a data producer corresponding to the RAN node and the topic 1.

The ID of the data producer corresponding to the RAN node may be an ID of a data producer returned by the DCP to the RAN node after the RAN node sends the message 1 to the DCP to create the data producer.

S914: The SDPF sends a data request message 1 to the DCP.

The data request message 1 may include an ID of a data consumer corresponding to the SDPF and the topic 1.

For example, the ID of the data consumer included in the data request message 1 is an ID of a data consumer returned by the DCP to the SDPF after the SDPF sends the message 3 to the DCP to create the data consumer.

S914 is optional.

S915: The DCP sends the sensing data 1 to the SDPF.

S916: The SDPF processes the sensing data 1 to obtain sensing data 2.

The sensing data 2 is data with the topic 2.

S917: The SDPF sends the sensing data 2 to the DCP.

S918: The NEF sends a data request message 2 to the DCP.

The data request message 2 may include an ID of a data consumer corresponding to the NEF and the topic 2.

For example, the ID of the data consumer included in the data request message 2 is an ID of a data consumer returned by the DCP to the NEF after the NEF sends the message 4 to the DCP to create the data consumer.

S918 is optional.

S919: The DCP sends the sensing data 2 to the NEF.

S920: The NEF sends the sensing data 2 to the third-party entity.

S921: The SSCF sends a sensing service stop message 1 to the UE.

S922: The SSCF sends a sensing service stop message 2 to the RAN node.

S923: The SSCF sends a sensing service stop message 3 to the SDPF.

S924: The SSCF sends a sensing service stop message 4 to the NEF.

A sequence of S921 to S924 is not limited in this application.

S921 to S924 are optional.

S925: The RAN node sends a message 5 to the DCP, where the message 5 is used to delete a data producer.

The message 5 may include an identity of the data producer.

S926: The SDPF sends a message 6 and a message 7 to the DCP, where the message 6 is used to delete a data producer, and the message 7 is used to delete a data consumer.

The message 6 may include an identity of the data producer.

The message 7 may include an identity of the data consumer.

S927: The NEF sends a message 8 to the DCP, where the message 8 is used to delete a data consumer.

The message 8 may include an identity of the data consumer.

A sequence of S925 to S927 is not limited in this application.

S925 to S927 are optional.

It should be understood that, in this application, a data producer creation step and a data consumer creation step may also be performed when a system is started, or the data producer creation step and the data consumer creation step may not be performed. This is not limited in this application.

In the example shown in FIG. 9A to 9C, the RAN node is directly connected to the DCP, and the DCP may directly publish and subscribe to sensing data, so that binding between a data producer and a data consumer is not necessary, and data transmission efficiency can be improved.

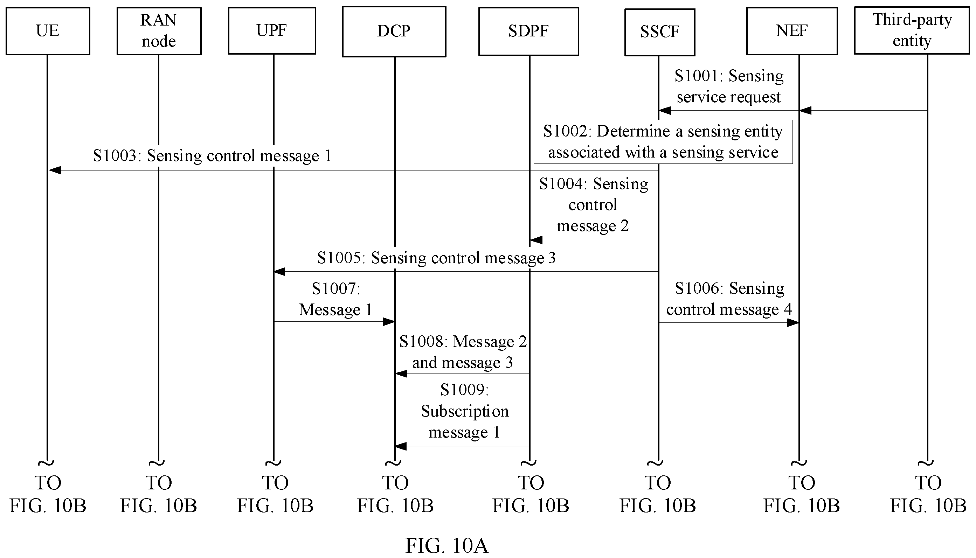

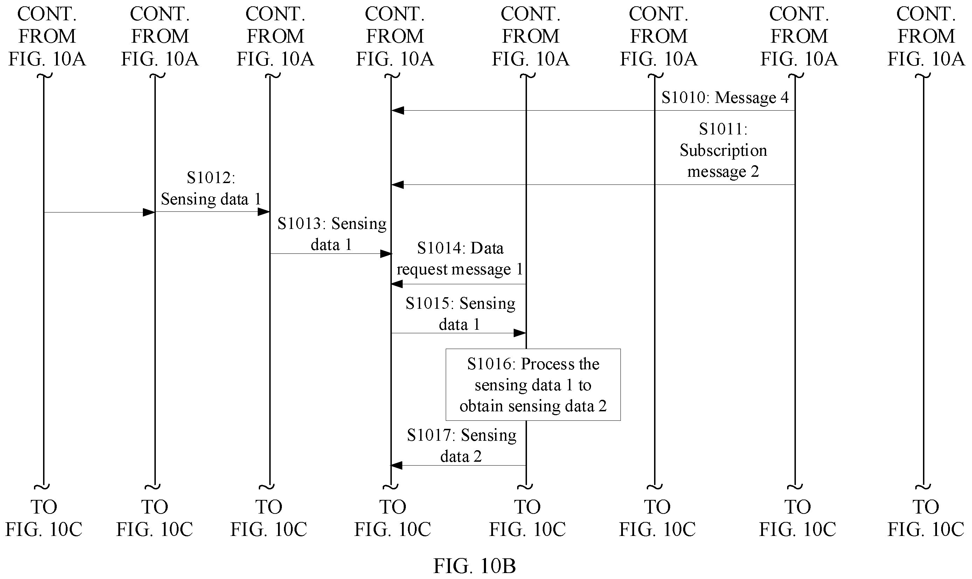

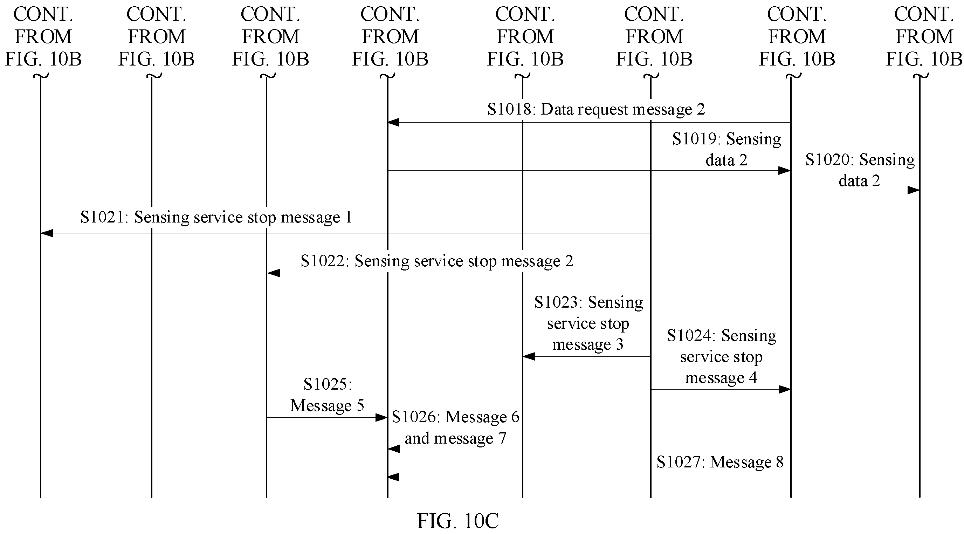

For example, FIG. 10A to 10C show an example of another communication method. In this example, UE is a sensing data source, and a RAN node may transparently transmit sensing data of the UE. This example corresponds to the sensing architecture shown in FIG. 5, where the RAN node is connected to the DCP through the UPF. For example, the example shown in FIG. 10A to 10C may include the following steps.

S1001: A third-party entity sends a sensing service request to an SSCF.

Optionally, the third-party entity may send the sensing service request to the SSCF through an NEF. S1001 in FIG. 10A to 10C is shown as an example. It should be understood that the third-party entity may directly send the sensing service request to the SSCF.

Optionally, for related descriptions of the sensing service request, refer to the descriptions in S901. Details are not described herein again.

S1002: The SSCF determines a sensing entity associated with the sensing service.

For example, the SSCF may select a transmission entity for sensing data, for example, UE, a UPF, or an SDPF.

S1003: The SSCF sends a sensing control message 1 to the UE. The sensing control message 1 indicates the UE to collect the sensing data.

Optionally, for related descriptions of the sensing control message 1, refer to the descriptions in S903. Details are not described herein again.

S1004: The SSCF sends a sensing control message 2 to the SDPF, where the sensing control message 2 indicates the SDPF to subscribe to data with a topic 1, and publish the data by using a topic 2 after performing data analysis on the data with the topic 1.

In this case, the SDPF can be either a data consumer or a data producer. When the SDPF is a data consumer, the SDPF may subscribe to the data with the topic 1, and in this case, the SDPF may correspond to the foregoing first network element. When the SDPF is a data producer, the SDPF may publish the data with the topic 2, and in this case, the SDPF may correspond to the foregoing second network element.

S1005: The SSCF sends a sensing control message 3 to the UPF, where the sensing control message 3 indicates the UPF to publish the data with the topic 1.

For example, the UPF is a data producer, and the UPF may correspond to the foregoing second network element.

S1006: The SSCF sends a sensing control message 4 to the NEF, where the sensing control message 4 indicates the NEF to subscribe to the data with the topic 2.

For example, the NEF is a data consumer, and the NEF may correspond to the foregoing first network element.

It should be understood that a sequence of S1003 to S1006 is merely an example, and is not limited in this application.

S1007: The UPF sends a message 1 to a DCP, where the message 1 is used to create a data producer.

The message 1 may include one or more of the following: a data producer name, a used transmission protocol, QoS, or a supported data compression algorithm.

For example, the data producer name in the message 1 may be a name defined by the UPF, for example, may be a UPF name, may be in another character string form, or may be in any other form. This is not limited in this application.

S1007 is optional.

S1008: The SDPF sends a message 2 and a message 3 to the DCP, where the message 2 is used to create a data producer, and the message 3 is used to create a data consumer.

The message 2 may include one or more of the following: a data producer name, a used transmission protocol, QoS, or a supported data compression algorithm.

The message 3 may include one or more of the following: a data consumer name, a used transmission protocol, a data consumer group identity, QoS, or a supported data compression algorithm.

Similarly, for the data producer name in the message 2 and the data consumer name in the message 3, refer to the related descriptions in the example shown in FIG. 9A to 9C. Details are not described herein again.

S1008 is optional.

A sequence of S1007 and S1008 is not limited in this application.

S1009: The SDPF sends a subscription message 1 to the DCP, where the subscription message 1 is used for the data with the topic 1.

For example, the subscription message 1 may include an ID of a data consumer and a topic list.

Similarly, for the ID of the data consumer in the subscription message 1, refer to the related descriptions in the example shown in FIG. 9A to 9C. Details are not described herein again.

Optionally, the subscription message 1 may further include subscription duration.

S1010: The NEF sends a message 4 to the DCP, where the message 4 is used to create a data consumer.

The message 4 may include one or more of the following: a data consumer name (refer to the related descriptions in the example shown in FIG. 9A to 9C), a used transmission protocol, a data consumer group identity, QoS, or a supported data compression algorithm.

S1010 is optional.

S1011: The NEF sends a subscription message 2 to the DCP, where the subscription message 2 is used to subscribe to the data with the topic 2.

For example, the subscription message 2 may include an ID of a data consumer (refer to the related descriptions in the example shown in FIG. 9A to 9C) and a topic list.

Optionally, the subscription message 2 may further include subscription duration.

S1012: The UE collects sensing data 1, and sends the sensing data 1 to the UPF through a RAN node.

The sensing data 1 is data with the topic 1.

S1013: The UPF sends the sensing data 1 to the DCP.

It should be understood that S1012 is described by using an example in which the UE collects the sensing data 1 with the topic 1, and then directly forwards the sensing data 1 to the DCP through the RAN node and the UPF. It should be understood that, in another possible manner, after the UE collects the sensing data and sends the sensing data to the UPF through the RAN node, the UPF processes the obtained sensing data to obtain the sensing data 1 with the topic 1, and then sends the sensing data 1 to the DCP.

For example, the UPF may further send, to the DCP, an ID of a data producer corresponding to the UPF and the topic 1.

The ID of the data producer corresponding to the UPF may be an ID of a data producer returned by the DCP to the UPF after the UPF sends the message 1 to the DCP to create the data producer.

S1014: The SDPF sends a data request message 1 to the DCP.

The data request message 1 may include an ID of a data consumer corresponding to the SDPF (refer to the related descriptions in the example shown in FIG. 9A to 9C) and the topic 1.

S1014 is optional.

S1015: The DCP sends the sensing data 1 to the SDPF.

S1016: The SDPF processes the sensing data 1 to obtain sensing data 2.

The sensing data 2 is data with the topic 2.

S1017: The SDPF sends the sensing data 2 to the DCP.

S1018: The NEF sends a data request message 2 to the DCP.

The data request message 2 may include an ID of a data consumer corresponding to the NEF (refer to the related descriptions in the example shown in FIG. 9A to 9C) and the topic 2.

S1018 is optional.

S1019: The DCP sends the sensing data 2 to the NEF.

S1020: The NEF sends the sensing data 2 to the third-party entity.

S1021: The SSCF sends a sensing service stop message 1 to the UE.

S1022: The SSCF sends a sensing service stop message 2 to the UPF.

S1023: The SSCF sends a sensing service stop message 3 to the SDPF.

S1024: The SSCF sends a sensing service stop message 4 to the NEF.

A sequence of S1021 to S1024 is not limited in this application.

S1021 to S1024 are optional.

S1025: The UPF sends a message 5 to the DCP, where the message 5 is used to delete a data producer.

The message 5 may include an identity of the data producer.

S1026: The SDPF sends a message 6 and a message 7 to the DCP, where the message 6 is used to delete a data producer, and the message 7 is used to delete a data consumer.

The message 6 may include an identity of the data producer.

The message 7 may include an identity of the data consumer.

S1027: The NEF sends a message 8 to the DCP, where the message 8 is used to delete a data consumer.

The message 8 may include an identity of the data consumer.

A sequence of S1025 to S1027 is not limited in this application.

S1025 to S1027 are optional.

It should be understood that, in this application, a data producer creation step and a data consumer creation step may also be performed when a system is started, or the data producer creation step and the data consumer creation step may not be performed. This is not limited in this application.

In the example shown in FIG. 10A to 10C, the DCP may directly publish and subscribe to sensing data, so that binding between a data producer and a data consumer is not necessary, and data transmission efficiency can be improved.

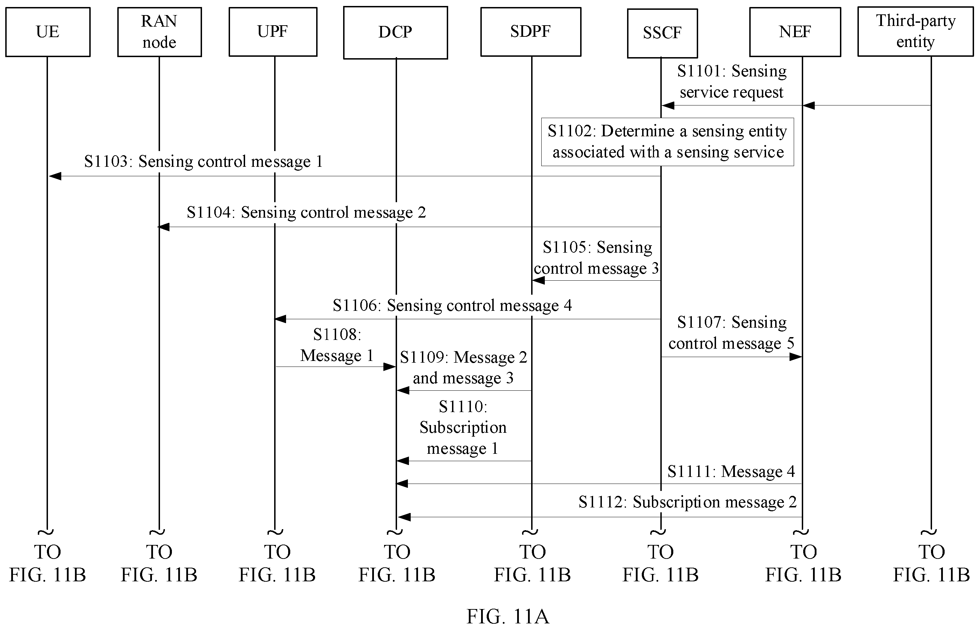

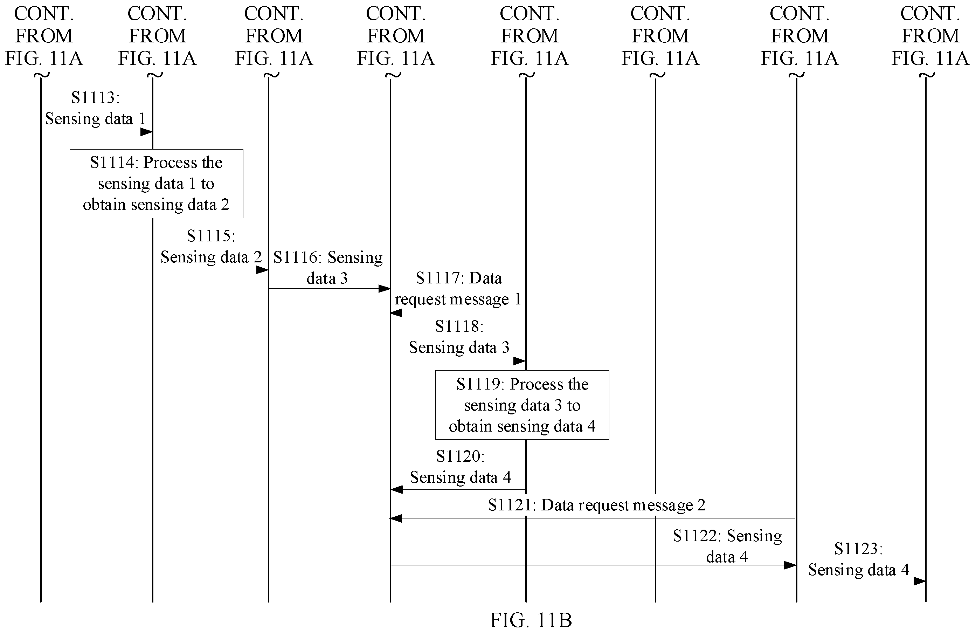

For example, FIG. 11A and 11B show an example of another communication method. In this example, UE is a sensing data source, and a RAN node may obtain sensing data of the UE and process the sensing data. This example corresponds to the sensing architecture shown in FIG. 5, where the RAN node is connected to the DCP through the UPF. For example, the example shown in FIG. 11A and 11B may include the following steps.

S1101: A third-party entity sends a sensing service request to an SSCF.

Optionally, the third-party entity may send the sensing service request to the SSCF through an NEF. S1101 in FIG. 11A and 11B is shown as an example. It should be understood that the third-party entity may directly send the sensing service request to the SSCF.

Optionally, for related descriptions of the sensing service request, refer to the descriptions in S901. Details are not described herein again.

S1102: The SSCF determines a sensing entity associated with the sensing service.

For example, the SSCF may select a transmission entity for sensing data, for example, UE, a RAN node, a UPF, or an SDPF.

S1103: The SSCF sends a sensing control message 1 to the UE. The sensing control message 1 indicates the UE to collect the sensing data.

Optionally, for related descriptions of the sensing control message 1, refer to the descriptions in S903. Details are not described herein again.

S1104: The SSCF sends a sensing control message 2 to the RAN node. The sensing control message 2 indicates the RAN node to process the sensing data.

S1105: The SSCF sends a sensing control message 3 to the SDPF, where the sensing control message 3 indicates the SDPF to subscribe to data with a topic 1, and publish the data by using a topic 2 after performing data analysis on the data with the topic 1.

In this case, the SDPF can be either a data consumer or a data producer. When the SDPF is a data consumer, the SDPF may subscribe to the data with the topic 1, and in this case, the SDPF may correspond to the foregoing first network element. When the SDPF is a data producer, the SDPF may publish the data with the topic 2, and in this case, the SDPF may correspond to the foregoing second network element.

S1106: The SSCF sends a sensing control message 4 to the UPF, where the sensing control message 4 indicates the UPF to publish the data with the topic 1.

For example, the UPF is a data producer, and the UPF may correspond to the foregoing second network element.

S1107: The SSCF sends a sensing control message 5 to the NEF, where the sensing control message 5 indicates the NEF to subscribe to the data with the topic 2.

For example, the NEF is a data consumer, and the NEF may correspond to the foregoing first network element.

It should be understood that a sequence of S1103 to S1107 is merely an example, and is not limited in this application.

S1108: The UPF sends a message 1 to a DCP, where the message 1 is used to create a data producer.

The message 1 may include one or more of the following: a data producer name, a used transmission protocol, QoS, or a supported data compression algorithm.

S1108 is optional.

S1109: The SDPF sends a message 2 and a message 3 to the DCP, where the message 2 is used to create a data producer, and the message 3 is used to create a data consumer.

The message 2 may include one or more of the following: a data producer name, a used transmission protocol, QoS, or a supported data compression algorithm.

The message 3 may include one or more of the following: a data consumer name, a used transmission protocol, a data consumer group identity, QoS, or a supported data compression algorithm.

S1109 is optional.

A sequence of S1108 and S1109 is not limited in this application.

S1110: The SDPF sends a subscription message 1 to the DCP, where the subscription message 1 is used for the data with the topic 1.

For example, the subscription message 1 may include an ID of a data consumer and a topic list.

Optionally, the subscription message 1 may further include subscription duration.

S1111: The NEF sends a message 4 to the DCP, where the message 4 is used to create a data consumer.

The message 4 may include one or more of the following: a data consumer name, a used transmission protocol, a data consumer group identity, QoS, or a supported data compression algorithm.

S1111 is optional.

S1112: The NEF sends a subscription message 2 to the DCP, where the subscription message 2 is used to subscribe to the data with the topic 2.

For example, the subscription message 2 may include an ID of a data consumer and a topic list.

Optionally, the subscription message 2 may further include subscription duration.

S1113: The UE collects sensing data 1, and sends the sensing data 1 to the RAN node.

S1114: The RAN node processes the sensing data 1 to obtain sensing data 2.

Processing performed by the RAN node on the sensing data 1 may be point cloud data processing or the like. This is not limited in this application.

S1115: The RAN node sends the sensing data 2 to the UPF.

S1116: The UPF sends sensing data 3 to the DCP.

The sensing data 3 is data with the topic 1.

Optionally, the sensing data 3 and the sensing data 2 may be the same, that is, the UPF does not process the data. The sensing data 3 may alternatively be sensing data obtained through data processing performed by the UPF on the sensing data 2. This is not limited in this application.

For example, the UPF may further send, to the DCP, an ID of a data producer corresponding to the UPF and the topic 1.

S1117: The SDPF sends a data request message 1 to the DCP.

The data request message 1 may include an ID of a data consumer corresponding to the SDPF and the topic 1.

S1117 is optional.

S1118: The DCP sends the sensing data 3 to the SDPF.

S1119: The SDPF processes the sensing data 3 to obtain sensing data 4.

The sensing data 4 is data with the topic 2.

S1120: The SDPF sends the sensing data 4 to the DCP.

S1121: The NEF sends a data request message 2 to the DCP.

The data request message 2 may include an ID of a data consumer corresponding to the NEF and the topic 2.

S1121 is optional.

S1122: The DCP sends the sensing data 4 to the NEF.

S1123: The NEF sends the sensing data 4 to the third-party entity.

Optionally, after step 1123, similar operations in S1021 to S1027 may also be performed in this example. For details, refer to the foregoing descriptions. The details are not described herein again, and are not shown in FIG. 11A and 11B.

It should be understood that, in this application, a data producer creation step and a data consumer creation step may also be performed when a system is started, or the data producer creation step and the data consumer creation step may not be performed. This is not limited in this application.

In the example shown in FIG. 11A and 11B, for related descriptions of the data producer name, the data consumer name, the ID of the data producer, and the ID of the data consumer, refer to the similar descriptions in the example shown in FIG. 10A to 10C. Details are not described in this example again.

In the example shown in FIG. 11A and 11B, the DCP may directly publish and subscribe to sensing data, so that binding between a data producer and a data consumer is not necessary, and data transmission efficiency can be improved.

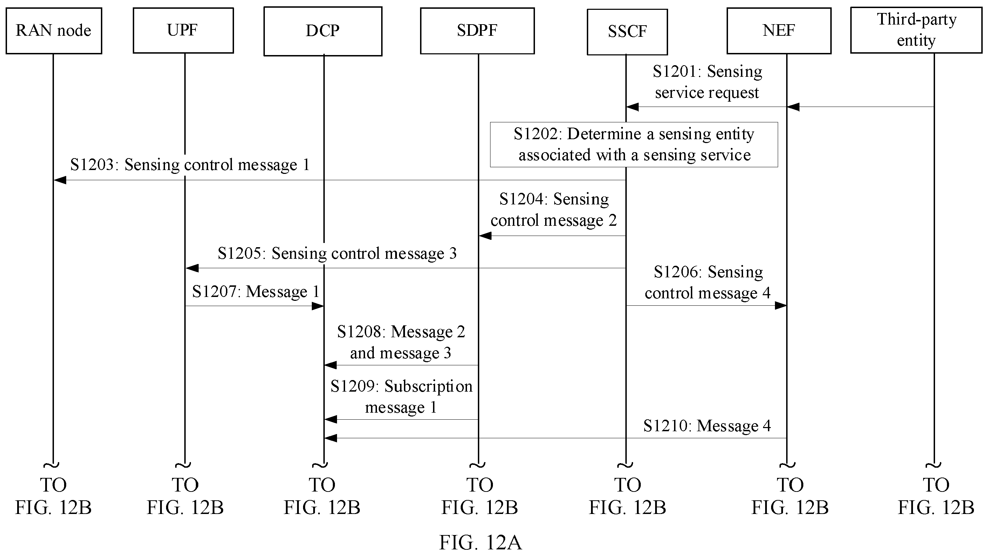

For example, FIG. 12A and 12B show an example of another communication method. In this example, a RAN node is a sensing data source. This example corresponds to the sensing architecture shown in FIG. 5, where the RAN node is connected to the DCP through the UPF. For example, the example shown in FIG. 12A and 12B may include the following steps.

S1201: A third-party entity sends a sensing service request to an SSCF.

Optionally, the third-party entity may send the sensing service request to the SSCF through an NEF. S1201 in FIG. 12A and 12B is shown as an example. It should be understood that the third-party entity may directly send the sensing service request to the SSCF.

Optionally, for related descriptions of the sensing service request, refer to the descriptions in S901. Details are not described herein again.

S1202: The SSCF determines a sensing entity associated with the sensing service.

For example, the SSCF may select a transmission entity for sensing data, for example, a RAN node, a UPF, or an SDPF.

S1203: The SSCF sends a sensing control message 1 to the RAN node. The sensing control message 1 indicates the RAN node to collect the sensing data.

Optionally, related descriptions of the sensing control message 1 is similar to the content of the sensing control message 1 in S903, reference may be made to each other, and details are not described herein again.

S1204: The SSCF sends a sensing control message 2 to the SDPF, where the sensing control message 2 indicates the SDPF to subscribe to data with a topic 1, and publish the data by using a topic 2 after performing data analysis on the data with the topic 1.

In this case, the SDPF can be either a data consumer or a data producer. When the SDPF is a data consumer, the SDPF may subscribe to the data with the topic 1, and in this case, the SDPF may correspond to the foregoing first network element. When the SDPF is a data producer, the SDPF may publish the data with the topic 2, and in this case, the SDPF may correspond to the foregoing second network element.

S1205: The SSCF sends a sensing control message 3 to the UPF, where the sensing control message 3 indicates the UPF to publish the data with the topic 1.

For example, the UPF is a data producer, and the UPF may correspond to the foregoing second network element.

S1206: The SSCF sends a sensing control message 4 to the NEF, where the sensing control message 4 indicates the NEF to subscribe to the data with the topic 2.

For example, the NEF is a data consumer, and the NEF may correspond to the foregoing first network element.

It should be understood that a sequence of S1203 to S1206 is merely an example, and is not limited in this application.

S1207: The UPF sends a message 1 to a DCP, where the message 1 is used to create a data producer.

The message 1 may include one or more of the following: a data producer name, a used transmission protocol, QoS, or a supported data compression algorithm.

S1207 is optional.

S1208: The SDPF sends a message 2 and a message 3 to the DCP, where the message 2 is used to create a data producer, and the message 3 is used to create a data consumer.

The message 2 may include one or more of the following: a data producer name, a used transmission protocol, QoS, or a supported data compression algorithm.

The message 3 may include one or more of the following: a data consumer name, a used transmission protocol, a data consumer group identity, QoS, or a supported data compression algorithm.

S1208 is optional.

A sequence of S1207 and S1208 is not limited in this application.

S1209: The SDPF sends a subscription message 1 to the DCP, where the subscription message 1 is used for the data with the topic 1.

For example, the subscription message 1 may include an ID of a data consumer and a topic list.

Optionally, the subscription message 1 may further include subscription duration.

S1210: The NEF sends a message 4 to the DCP, where the message 4 is used to create a data consumer.

The message 4 may include one or more of the following: a data consumer name, a used transmission protocol, a data consumer group identity, QoS, or a supported data compression algorithm.

S1210 is optional.

S1211: The NEF sends a subscription message 2 to the DCP, where the subscription message 2 is used to subscribe to the data with the topic 2.

For example, the subscription message 2 may include an ID of a data consumer and a topic list.

Optionally, the subscription message 2 may further include subscription duration.

S1212: The RAN node collects sensing data 1, and sends the sensing data 1 to the UPF.

The sensing data 1 is data with the topic 1.

S1213: The UPF sends the sensing data 1 to the DCP.

It should be understood that S1212 is described by using an example in which the RAN node collects the sensing data 1 with the topic 1, and then forwards the sensing data 1 to the DCP through the UPF. It should be understood that, in another possible manner, after the RAN node collects the sensing data and sends the sensing data to the UPF, the UPF processes the obtained sensing data to obtain the sensing data 1 with the topic 1, and then sends the sensing data 1 to the DCP.

For example, the UPF may further send, to the DCP, an ID of a data producer corresponding to the UPF and the topic 1.

S1214: The SDPF sends a data request message 1 to the DCP.

The data request message 1 may include an ID of a data consumer corresponding to the SDPF and the topic 1.

S1214 is optional.

S1215: The DCP sends the sensing data 1 to the SDPF.

S1216: The SDPF processes the sensing data 1 to obtain sensing data 2.

The sensing data 2 is data with the topic 2.

S1217: The SDPF sends the sensing data 2 to the DCP.

S1218: The NEF sends a data request message 2 to the DCP.

The data request message 2 may include an ID of a data consumer corresponding to the NEF and the topic 2.

S1218 is optional.

S1219: The DCP sends the sensing data 2 to the NEF.

S1220: The NEF sends the sensing data 2 to the third-party entity.

Optionally, after S1220, similar operations in S1021 to S1027 may also be performed in this example. For details, refer to the foregoing descriptions. The details are not described herein again, and are not shown in FIG. 11A and 11B.

It should be understood that, in this application, a data producer creation step and a data consumer creation step may also be performed when a system is started, or the data producer creation step and the data consumer creation step may not be performed. This is not limited in this application.

In the example shown in FIG. 12A and 12B, for related descriptions of the data producer name, the data consumer name, the ID of the data producer, and the ID of the data consumer, refer to the similar descriptions in the example shown in FIG. 10A to 10C. Details are not described in this example again.

In the example shown in FIG. 12A and 12B, the DCP may directly publish and subscribe to sensing data, so that binding between a data producer and a data consumer is not necessary, and data transmission efficiency can be improved.

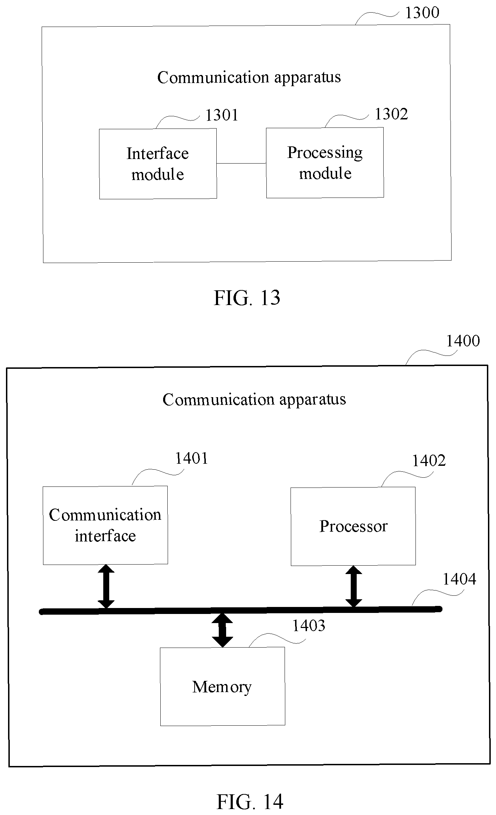

Based on the foregoing embodiments, an embodiment of this application further provides a communication apparatus. As shown in FIG. 13, the communication apparatus 1300 may include an interface module 1301 and a processing module 1302. The interface module 1301 may be configured to send and receive information, and the like. The processing module 1302 may control and manage an action of the communication apparatus 1300. The processing module 1302 may further control an operation performed by the interface module 1301.

For example, the communication apparatus 1300 may be the data communication proxy (for example, the DCP in FIG. 9A to 9C to FIG. 12A and 12B), a processor, a chip, a chip system, a functional module, or the like of the data communication proxy in the foregoing embodiments. Alternatively, the communication apparatus 1300 may be the first network element (for example, a network element serving as a data consumer in FIG. 9A to 9C to FIG. 12A and 12B), a processor, a chip, a chip system, a functional module, or the like of the first network element in the foregoing embodiments. Alternatively, the communication apparatus 1300 may be the second network element (for example, a network element serving as a data producer in FIG. 9A to 9C to FIG. 12A and 12B), a processor, a chip, a chip system, a function module, or the like of the second network element in the foregoing embodiments.

In an embodiment, when the communication apparatus 1300 is configured to implement a function of the data communication proxy in the foregoing embodiments, the interface module 1301 supports a plurality of transmission protocols, and the processing module 1302 is configured to process related information of a data producer and a data consumer. Specifically, the interface module 1301 may be configured to: receive a first subscription message from a first network element in the 3GPP network, where the first subscription message is used to subscribe to data of a first information type; receive first data from a second network element in the 3GPP network, where the first data is data of the first information type, and the first data is encapsulated by using a first transmission protocol in the plurality of transmission protocols; and send the first data to the first network element. The processing module 1302 may be configured to control a sending/receiving operation by the interface module 1301.

For example, the plurality of transmission protocols include a plurality of transmission protocols in the following: a TCP, a UDP, or a QUIC protocol.

In a possible manner, the first transmission protocol is indicated by a sensing service control function network element.

In an optional implementation, the first network element is a first access network device, and the second network element is a second access network device; the first network element is a first core network device, and the second network element is a second core network device; the first network element is an access network device, and the second network element is a core network device; or the first network element is a core network device, and the second network element is an access network device.

For example, the first network element is a sensing data processing function network element, the second network element is an access network device, and the first information type is indicated by a sensing service control function network element; the first network element is a sensing data processing function network element, the second network element is a user plane function network element, and the first information type is indicated by a sensing service control function network element; or the first network element is a network exposure function network element, the second network element is a sensing data processing function network element, and the first information type is indicated by the sensing service control function network element.

Optionally, the interface module 1301 may be further configured to receive a data request message from the first network element before sending the first data to the first network element.

In an example, the interface module 1301 may be further configured to receive a first message, where the first message is used to create a data producer.

For example, the first message may include one or more of the following: a data producer name, a used transmission protocol, quality of service QoS, or a supported data compression algorithm.

In some embodiments, the interface module 1301 may be further configured to receive a second message, where the second message is used to delete a data producer.

For example, the second message includes an identity of the data producer.

In some embodiments, the interface module 1301 may be further configured to receive a third message, where the third message is used to create a data consumer.

The third message may include one or more of the following: a data consumer name, a used transmission protocol, a data consumer group identity, quality of service QoS, or a supported data compression algorithm.

In some embodiments, the interface module 1301 may be further configured to receive a fourth message, where the fourth message is used to delete a data consumer.

Optionally, the fourth message includes an identity of the data consumer.

In another embodiment, when the communication apparatus 1300 is configured to implement a function of the first network element in the foregoing embodiments, to be specific, the interface module 1301 may be configured to: receive a first control message from a sensing service control function network element in the 3GPP network, where the first control message indicates to receive data of a first information type; send a first subscription message to a data communication proxy in the 3GPP network, where the first subscription message is used to subscribe to the data of the first information type, and the data communication proxy supports a plurality of transmission protocols; and receive first data from the data communication proxy, where the first data is data of the first information type, and the first data is encapsulated by using a first transmission protocol in the plurality of transmission protocols. The processing module 1302 may be configured to control a sending/receiving operation by the interface module 1301.

For example, the plurality of transmission protocols include a plurality of transmission protocols in the following: a TCP, a UDP, or a QUIC protocol.

Optionally, the first transmission protocol is indicated by the sensing service control function network element.

In a possible manner, the interface module 1301 may be further configured to send a data request message to the data communication proxy before receiving the first data from the data communication proxy.

In an example, the interface module 1301 may be further configured to send a third message to the data communication proxy, where the third message is used to create a data consumer.

For example, the third message may include one or more of the following: a data consumer name, a used transmission protocol, a data consumer group identity, quality of service QoS, or a supported data compression algorithm.

In an example, the interface module 1301 may be further configured to: receive a first service stop message from the sensing service control function network element; and send a fourth message to the data communication proxy, where the fourth message is used to delete a data consumer.

Optionally, the fourth message includes an identity of the data consumer.

In another embodiment, when the communication apparatus 1300 is configured to implement a function of the second network element in the foregoing embodiments, to be specific, the interface module 1301 may be configured to: receive a second control message from a sensing service control function network element in the 3GPP network, where the second control message indicates to send data of a first information type; and send first data to a data communication proxy in the 3GPP network, where the first data is data of the first information type, the data communication proxy supports a plurality of transmission protocols, and the first data is encapsulated by using a first transmission protocol in the plurality of transmission protocols. The processing module 1302 may be configured to control a sending/receiving operation by the interface module 1301.

For example, the plurality of transmission protocols include a plurality of transmission protocols in the following: a TCP, a UDP, or a QUIC protocol.

Optionally, the first transmission protocol is indicated by the sensing service control function network element.

In a possible manner, the interface module 1301 may be further configured to send a first message to the data communication proxy, where the first message is used to create a data producer.

For example, the first message includes one or more of the following: a data producer name, a used transmission protocol, quality of service QoS, or a supported data compression algorithm.

In a possible manner, the interface module 1301 may be further configured to: receive a second service stop message from the sensing service control function network element; and send a second message to the data communication proxy, where the second message is used to delete a data producer.

Optionally, the second message includes an identity of the data producer.

It should be noted that, in this embodiment of this application, division into the units is an example, and is merely a logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the contributing part, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. As shown in FIG. 14, the communication apparatus 1400 may include a communication interface 1401 and a processor 1402. Optionally, the communication apparatus 1400 may further include a memory 1403. The memory 1403 may be disposed inside the communication apparatus 1400, or may be disposed outside the communication apparatus 1400. The processor 1402 may control the communication interface 1401 to send and receive a signal, a message, information, data, or the like.

Optionally, the communication interface 1401 may be a transceiver, and the transceiver may include a transmitter and/or a receiver. The transmitter is configured to send a signal, a message, information, data, or the like. The receiver is configured to receive a signal, a message, information, data, or the like. For example, the transmitter sends a signal, a message, information, data, or the like under control of the processor 1402. The receiver receives a signal, a message, information, data, or the like under control of the processor 1402.

Specifically, the processor 1402 may be a central processing unit (central processing unit, CPU), a network processor (network processor, NP), or a combination of a CPU and an NP. The processor 1402 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The communication interface 1401, the processor 1402, and the memory 1403 are connected to each other. Optionally, the communication interface 1401, the processor 1402, and the memory 1403 are connected to each other through a bus 1404. The bus 1404 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one bold line is used to represent the bus in FIG. 14, but this does not mean that there is only one bus or only one type of bus.

In an optional implementation, the memory 1403 is configured to store a program and the like. Specifically, the program may include program code, and the program code includes computer operation instructions. The memory 1403 may include a RAM, and may further include a non-volatile memory (non-volatile memory), for example, one or more magnetic disk memories. The processor 1402 executes an application stored in the memory 1403 to implement the foregoing functions, so as to implement a function of the communication apparatus 1400.

For example, the communication apparatus 1400 may be specifically the data communication proxy in the foregoing embodiments, or may be the first network element, the second network element, or the like in the foregoing embodiments. Alternatively, the communication apparatus 1400 may be a chip or the like.

In an embodiment, when the communication apparatus 1400 implements a function of the data communication proxy in the foregoing embodiments, the communication interface 1401 may implement a sending/receiving operation performed by the data communication proxy in the foregoing embodiments; and the processor 1402 may implement an operation, other than the sending/receiving operation, performed by the data communication proxy in the foregoing embodiments. Specifically, for related specific descriptions, refer to the related descriptions in the foregoing embodiments. Details are not described herein again.

In another embodiment, when the communication apparatus 1400 implements a function of the first network element in the foregoing embodiments, the communication interface 1401 may implement a sending/receiving operation performed by the first network element in the foregoing embodiments; and the processor 1402 may implement an operation, other than the sending/receiving operation, performed by the first network element in the foregoing embodiments. Specifically, for related specific descriptions, refer to the related descriptions in the foregoing embodiments. Details are not described herein again.

In still another embodiment, when the communication apparatus 1400 implements a function of the second network element in the foregoing embodiments, the communication interface 1401 may implement a sending/receiving operation performed by the second network element in the foregoing embodiments; and the processor 1402 may implement an operation, other than the sending/receiving operation, performed by the second network element in the foregoing embodiments. Specifically, for related specific descriptions, refer to the related descriptions in the foregoing embodiments. Details are not described herein again.

Based on the foregoing embodiment, an embodiment of this application provides a 3GPP network. The 3GPP network may include the data communication proxy, the first network element, the second network element, and the like in the foregoing embodiments.

An embodiment of this application further provides a computer-readable storage medium. The computer-readable storage medium is configured to store a computer program or computer-executable instructions. When the computer program or the computer-executable instructions are executed by a computer, the computer may implement the communication method provided in the foregoing method embodiments.

An embodiment of this application further provides a computer program product. The computer program product includes a computer program or instructions. When the computer program or instructions are executed by a computer, the computer may implement the communication method provided in the foregoing method embodiments.

An embodiment of this application further provides a chip, including a processor. The processor is configured to cause the chip to implement the communication method provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, applied to a data communication proxy, wherein the data communication proxy is deployed in a 3rd Generation Partnership Project 3GPP network, and the data communication proxy supports a plurality of transmission protocols; and the method comprises:
receiving a first subscription message from a first network element in the 3GPP network, wherein the first subscription message is used to subscribe to data of a first information type;
receiving first data from a second network element in the 3GPP network, wherein the first data is data of the first information type, and the first data is encapsulated by using a first transmission protocol in the plurality of transmission protocols; and
sending the first data to the first network element.

2. The method according to claim 1, wherein
the first network element is a first access network device, and the second network element is a second access network device;
the first network element is a first core network device, and the second network element is a second core network device;
the first network element is an access network device, and the second network element is a core network device; or
the first network element is the core network device, and the second network element is the access network device.

3. The method according to claim 1 or 2, wherein
the first network element is a sensing data processing function network element, the second network element is an access network device, and the first information type is indicated by a sensing service control function network element;
the first network element is a sensing data processing function network element, the second network element is a user plane function network element, and the first information type is indicated by a sensing service control function network element; or
the first network element is a network exposure function network element, the second network element is a sensing data processing function network element, and the first information type is indicated by the sensing service control function network element.

4. The method according to any one of claims 1 to 3, wherein before sending the first data to the first network element, the method further comprises:
receiving a data request message from the first network element.

5. The method according to any one of claims 1 to 4, wherein the method further comprises:
receiving a first message, wherein the first message is used to create a data producer.

6. The method according to any one of claims 1 to 5, wherein the method further comprises:
receiving a second message, wherein the second message is used to delete a data producer.

7. The method according to any one of claims 1 to 6, wherein the method further comprises:
receiving a third message, wherein the third message is used to create a data consumer.

8. The method according to any one of claims 1 to 7, wherein the method further comprises:
receiving a fourth message, wherein the fourth message is used to delete a data consumer.

9. A communication method, applied to a first network element, wherein the first network element is deployed in a 3rd Generation Partnership Project 3GPP network, and the method comprises:
receiving a first control message from a sensing service control function network element in the 3GPP network, wherein the first control message indicates to receive data of a first information type;
sending a first subscription message to a data communication proxy in the 3GPP network, wherein the first subscription message is used to subscribe to the data of the first information type, and the data communication proxy supports a plurality of transmission protocols; and
receiving first data from the data communication proxy, wherein the first data is data of the first information type, and the first data is encapsulated by using a first transmission protocol in the plurality of transmission protocols.

10. The method according to claim 9, wherein before receiving the first data from the data communication proxy, the method further comprises:
sending a data request message to the data communication proxy.

11. The method according to claim 9 or 10, wherein the method further comprises:
sending a third message to the data communication proxy, wherein the third message is used to create a data consumer.

12. The method according to any one of claims 9 to 11, wherein the method further comprises:
receiving a first service stop message from the sensing service control function network element; and
sending a fourth message to the data communication proxy, wherein the fourth message is used to delete a data consumer.

13. A communication method, applied to a second network element, wherein the second network element is deployed in a 3rd Generation Partnership Project 3GPP network, and the method comprises:
receiving a second control message from a sensing service control function network element in the 3GPP network, wherein the second control message indicates to send data of a first information type; and
sending first data to a data communication proxy in the 3GPP network, wherein the first data is data of the first information type, the data communication proxy supports a plurality of transmission protocols, and the first data is encapsulated by using a first transmission protocol in the plurality of transmission protocols.

14. The method according to claim 13, wherein the method further comprises:
sending a first message to the data communication proxy, wherein the first message is used to create a data producer.

15. The method according to claim 13 or 14, wherein the method further comprises:
receiving a second service stop message from the sensing service control function network element; and
sending a second message to the data communication proxy, wherein the second message is used to delete a data producer.

16. The method according to any one of claims 1 to 15, wherein the plurality of transmission protocols comprise a plurality of transmission protocols in the following: a transmission control protocol TCP, a user datagram protocol UDP, or a quick UDP internet connection QUIC protocol.

17. The method according to any one of claims 1 to 16, wherein the first transmission protocol is indicated by the sensing service control function network element.

18. The method according to claim 5 or 14, wherein the first message comprises one or more of the following: a data producer name, a used transmission protocol, quality of service QoS, or a supported data compression algorithm.

19. The method according to claim 6 or 15, wherein the second message comprises an identity of the data producer.

20. The method according to claim 7 or 11, wherein the third message comprises one or more of the following: a data consumer name, a used transmission protocol, a data consumer group identity, quality of service QoS, or a supported data compression algorithm.

21. The method according to claim 8 or 12, wherein the fourth message comprises an identity of the data consumer.

22. A communication apparatus, comprising an interface module and a processing module, wherein the interface module supports a plurality of transmission protocols, and the processing module is configured to process related information of a data producer and a data consumer;
the interface module is specifically configured to send and receive a message or data; and
the processing module is specifically configured to perform the method according to any one of claims 1 to 8 and 16 to 21 through the interface module.

23. A communication apparatus, comprising:
an interface module, configured for communication of the communication apparatus; and
a processing module, configured to perform the method according to any one of claims 9 to 12 and 16 to 21 or the method according to any one of claims 13 to 21 through the interface module.

24. A communication apparatus, comprising a communication interface and a processor, wherein the communication interface supports a plurality of transmission protocols, and the processor is configured to process related information of a data producer and a data consumer;
the communication interface is specifically configured to send and receive a message or data; and
the processor is specifically configured to perform the method according to any one of claims 1 to 8 and 16 to 21 through the communication interface.

25. A communication apparatus, comprising:
a communication interface, configured for communication of the communication apparatus; and
a processor, configured to perform the method according to any one of claims 9 to 12 and 16 to 21 or the method according to any one of claims 13 to 21 through the communication interface.

26. A computer-readable storage medium, wherein the computer-readable storage medium stores a computer program or computer-executable instructions; and when the computer program or the computer-executable instructions are invoked by a computer, the method according to any one of claims 1 to 8 and 16 to 21, the method according to any one of claims 9 to 12 and 16 to 21, or the method according to any one of claims 13 to 21 is performed.

27. A chip, comprising a processor, wherein the processor is configured to perform the method according to any one of claims 1 to 8 and 16 to 21, the method according to any one of claims 9 to 12 and 16 to 21, or the method according to any one of claims 13 to 21.

28. A computer program product, wherein the computer program product comprises a computer program or instructions; and when the computer program or the instructions are run on a computer, the computer is caused to perform the method according to any one of claims 1 to 8 and 16 to 21, the method according to any one of claims 9 to 12 and 16 to 21, or the method according to any one of claims 13 to 21.
